# EUROPÄISCHE PATENTANMELDUNG

(11) **EP 3 531 393 A1**
(43) Veröffentlichungstag der Anmeldung: **28.08.2019**
(21) Anmeldenummer: 18158783.3
(22) Anmeldetag: 27.02.2018
(51) Int. Cl.: G08G 1/017, B60Q 1/30, H04N 7/18

(54) **VERFAHREN UND FAHRZEUGLEUCHTE ZUR BEWEISERFASSUNG BEI UNTERSCHREITUNG EINES SICHERHEITSABSTANDS ZWISCHEN AUFEINANDER FOLGENDEN FAHRZEUGEN**

(71) Anmelder: odelo GmbH, 70329 Stuttgart (DE)
(72) Erfinder: EBENBICHLER, Albert, 73728 Esslingen (DE)
(74) Vertreter: Benninger, Johannes

(57) **Zusammenfassung**

Verfahren und eine Fahrzeugleuchte (01) zur Beweiserfassung bei Unterschreitung eines Sicherheitsabstands zwischen aufeinander folgenden Fahrzeugen (A, B), einem eigenen Fahrzeug (A) und wenigstens einem fremden Fahrzeug (B) in dessen Umgebung und/oder Umfeld beschrieben. Das Verfahren umfasst eine Messung eines Abstands (F) vom eigenen Fahrzeug (A) aus zu einem fremden Fahrzeug (B), wobei bei einer durch einen Vergleich des gemessenen Abstands (F) mit einem Abstandsschwellenwert festgestellten Unterschreitung eines vorgegebenen Mindestabstands und/oder eines dem Mindestabstand proportionalen Sicherheitsabstands (E) eine Erfassung und zumindest zeitweilige Speicherung von einem oder mehreren Bildern zumindest desjenigen Teils der Umgebung und/oder des Umfelds des eigenen Fahrzeugs (A) aktiviert wird, in welchem Teil der Umgebung und/oder des Umfelds des eigenen Fahrzeugs (A) sich das fremde Fahrzeug (B), dessen gemessener Abstand (F) zum eigenen Fahrzeug (A) den Abstandsschwellenwert (E) unterschreitet, befindet. Die Fahrzeugleuchte umfasst ein Leuchtengehäuse und wenigstens eine Lichtscheibe, welche zumindest teilweise einen Leuchteninnenraum umgeben, mindestens ein in dem Leuchteninnenraum wenigstens zum Teil beherbergtes Leuchtmittel mit mindestens einer Lichtquelle zur Erfüllung zumindest einer Lichtfunktion, mindestens eine auf eine dem Leuchtengehäuse abgewandte Umgebung gerichtete und in zumindest einem Teil des Leuchteninnenraums wenigstens teilweise beherbergte Kamera, mit der Kamera verbundene Speichermittel zur Speicherung zumindest von von der Kamera erfasster Bilder der Umgebung, Mittel zur Erfassung eines Abstands zu einem fremden Fahrzeug (B) in der von der Kamera einsehbaren Umgebung der Fahrzeugleuchte (01), sowie mit den Mitteln zur Abstandsmessung verbundene Mittel zum Vergleich des gemessenen Abstands mit einem Abstandsschwellenwert (E), wobei die Mittel zum Vergleich mit der Kamera und/oder den Speichermitteln derart verbunden sind, dass sie eine Aufnahme von Bildern der Umgebung durch die Kamera und/oder eine Speicherung der von der Kamera erfassten Bilder der Umgebung auslösen, wenn das Ergebnis des Vergleichs ist, dass der gemessene Abstand (F) kleiner ist, als der Abstandsschwellenwert (E).

## Beschreibung

Die Erfindung betrifft ein Verfahren zur Beweiserfassung bei Unterschreitung eines Sicherheitsabstands zwischen aufeinander folgenden Fahrzeugen gemäß dem Oberbegriff des Anspruchs 1, sowie eine zur Durchführung eines solchen Verfahrens geeignete eine Fahrzeugleuchte gemäß dem Oberbegriff des Anspruchs 9.

Insbesondere betrifft die Erfindung eine Fahrzeugleuchte mit einer integrierten Beweismittel-Erfassungskamera.

Ein zu geringer Abstand zu dem voraus fahrenden Fahrzeug kann bei einer Vollbremsung des vorausfahrenden Fahrzeuges zu einem Auffahrunfall führen.

Abhilfe kann durch Einhaltung eines einem zur Vermeidung eines Auffahrunfalls notwendigen Mindestabstand proportionalen Sicherheitsabstands geschaffen werden. Dieser Mindestabstand ist einerseits abhängig von den herrschenden physikalischen Randbedingungen und andererseits vom physiologisch bedingten Reaktionsvermögen des Fahrers des nachfolgenden Fahrzeugs.

Diesen Sicherheitsabstand zu bemessen obliegt bislang zumeist dem Fahrer des nachfolgenden Fahrzeugs, der sich hierzu diverser in der Fahrschule erlernter Faustregeln zu bedienen hat, wie etwa Bremsabstand = Halber Tacho-Wert in Metern, wie beispielsweise 40 m Sicherheitsabstand bei 80 km/h. Diese Faustregeln sind aber entsprechen vage, weil die Abstände beispielsweise anhand der Fahrbahnmarkierungen und/oder anhand von zur Abgrenzung der Fahrbahn und zum besseren Erkennen deren Verlaufs vorgesehener Leitpfosten geschätzt werden müssen.

Dunkelheit sowie witterungsbedingte schlechte Sichtverhältnisse erschweren die Schätzung der Abstände zusätzlich.

Für eine gerichtlich verwertbare Beweisaufnahme werden bislang speziell dafür ausgerüstete Einsatzfahrzeuge der Polizei benötigt, die das Vergehen auf frischer Tat zu beobachten geeignet und mit entsprechenden Videoaufzeichnungsmitteln ausgestattet sind.

Bei der polizeilichen Verkehrsüberwachung vom fahrenden Einsatzfahrzeug aus wird die Geschwindigkeit der beobachteten Fahrzeuge anhand der Geschwindigkeit des in gleichbleibendem Abstand zu haltenden Einsatzfahrzeugs der Polizei erfasst. Von diesem aus werden im Verdachtsfall grob verkehrsgefährdenden Handelns Videoaufnahmen gestartet und aufgezeichnet.

Diese Videoaufnahmen können dabei nur in solchen ganz eindeutigen Fällen als Beweis für einen gegebenenfalls zu geringen Abstand des dem Einsatzfahrzeug der Polizei unmittelbar vorausfahrenden Fahrzeugs zum diesem vorausfahrenden herhalten, in denen derart extreme Unterschreitungen des Mindestabstands zwischen den vorausfahrenden Fahrzeugen vorliegen, dass im Falle eines hieraus herrührenden Unfalls das Einsatzfahrzeug selbst unmittelbar einer ernsthaften Gefährdung ausgesetzt ist. Durch eine potentielle Verwicklung eines Einsatzfahrzeugs der Polizei ergibt sich durch die damit einhergehende Steigerung der Anzahl der in einen Unfall aufgrund unterschrittenen Mindestabstands verwickelten Fahrzeuge eine erhebliche Steigerung der Unfallschwere und damit eine wesentlich erheblichere Beeinträchtigung der Verkehrssicherheit, als ohne Beteiligung des Einsatzfahrzeugs.

Aus dem Stand der Technik ist beispielsweise von so genannten Abstandsregeltempomaten bekannt, vom eigenen, nachfolgenden Fahrzeug aus Abstände zu vorausfahrenden Fahrzeugen zu erfassen und konstant einzuhalten.

Ebenfalls sind vorder- und/oder rückseitig am eigenen Fahrzeug angeordnete Sensoren bekannt, welche zur Unterstützung beim Einparken Abstände zu vor und/oder hinter dem eigenen Fahrzeug befindlichen Objekten erfassen und bei Unterschreitung vorgegebener Schwellenwerte zunehmende Warnsignale an den Fahrer des eigenen Fahrzeugs ausgeben.

Darüber hinaus ist bekannt, dass die zur Unterstützung beim Einparken erwähnten Sensoren während der Fahrt, insbesondere bei langsamer Fahrt des eigenen Fahrzeugs aktiviert sind.

Ferner ist durch DE 27 04 178 A1 bekannt, am vorausfahrenden Fahrzeug eine Sendeeinrichtung für Abstandsmesssignale und am nachfolgenden Fahrzeug eine Empfangseinrichtung für die Abstandsmesssignale sowie eine Auswerte- und Anzeigeeinheit vorzusehen, welche den Abstand zum Vordermann erfasst und bei Unterschreitung eines Mindestabstands eine Warnung ausgibt.

Ein solcher Warnhinweis für das eigene, nachfolgende Fahrzeug, wenn dieses den erforderlichen Mindestabstand unterschreitet, kann Auffahrunfälle vermeiden helfen.

Nachteilig am Stand der Technik ist die notwendige Infrastruktur am nachfolgenden Fahrzeug.

Durch DE 10 2012 221 074 A1 ist eine Fahrzeugleuchte bekannt, welche eine Kamera aufweist, deren Strahlengang durch wenigstens einen Abschnitt eines Scheinwerferglases der Fahrzeugleuchte geführt ist.

Durch DE 100 37 217 A1 ist eine als ein Scheinwerfer ausgebildete Fahrzeugleuchte bekannt, welche einen optischen Sensor zur Abstandsmessung mit einem Sendeelement und einem Empfangselement beherbergt. Der Strahlengang des Sendeelements ist durch eine Trennvorrichtung von demjenigen des Empfangselements getrennt, um Verfälschungen aufgrund von Reflexionen an einer Lichtscheibe des Scheinwerfers zu verhindern.

Nachteilig am Stand der Technik ist die notwendige Infrastruktur am nachfolgenden Fahrzeug.

Ein zusätzlicher Nachteil ist, das sich die Beweiserfassung sowie die hierzu erfassten Bilder und/oder Videos nicht im Machtbereich des vorausfahrenden Fahrzeugs befinden, welches durch Unterschreitung des Sicherheitsabstands durch das nachfolgende, fremde Fahrzeug in der überwiegenden Anzahl der Fälle wenigstens genötigt oder gar geschädigt ist und im Falle eines aufgrund einer Unterschreitung des Sicherheitsabstands eingetretenen Unfalls in der überwiegenden Anzahl der Fälle nicht als der Unfallverursacher angesehen wird.

Eine Fahrzeugleuchte umfasst beispielsweise einen im Wesentlichen von einem Leuchtengehäuse und einer Lichtscheibe umschlossenen Leuchteninnenraum und mindestens ein gegebenenfalls zumindest zum Teil darin beherbergtes, mindestens eine Lichtquelle umfassendes Leuchtmittel für wenigstens eine Lichtfunktion der Fahrzeugleuchte.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest. Je höher dabei die Helligkeit ist, um so weiter trägt die Lichtfunktion bzw. um so größer ist die kurz als Sichtweite bezeichnete Entfernung, aus der sie wahrgenommen werden kann.

Für die einzelnen Lichtfunktionen sind zum Teil unterschiedliche Helligkeiten bzw. Sichtweiten sowie zum Teil unterschiedliche Lichtfarben vorgegeben.

Eine Aufgabe der Erfindung ist es, ein Verfahren zur Beweiserfassung bei Unterschreitung eines Sicherheitsabstands zwischen aufeinander folgenden Fahrzeugen und eine zur Durchführung eines solchen Verfahrens geeignete Fahrzeugleuchte zu schaffen, welche die Verkehrssicherheit nachhaltig steigern, ohne bei anderen, als einem eigenen Fahrzeug, eine gesonderte, durch besondere Einrichtungen gebildete Infrastruktur vorauszusetzen.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Ein erster Gegenstand der Erfindung betrifft demnach ein Verfahren zur Beweiserfassung bei Unterschreitung eines Sicherheitsabstands zwischen aufeinander folgenden Fahrzeugen, einem eigenen Fahrzeug und wenigstens einem fremden Fahrzeug in dessen Umgebung und/oder Umfeld.

Bei den Fahrzeugen handelt es sich insbesondere um zur Teilnahme am Straßenverkehr vorgesehene und/oder zugelassene Automobile und/oder Kraftfahrzeuge.

Das Verfahren sieht vor, vom beispielsweise vorausfahrenden, eigenen Fahrzeug aus einen Abstand zum beispielsweise nachfolgenden, fremden Fahrzeug beispielsweise permanent oder in beispielsweise eng getakteten, diskreten Schritten zu messen und hierdurch zu überwachen.

Mit anderen Worten sieht das Verfahren zunächst eine Überwachung des Abstands zwischen dem beispielsweise vorausfahrenden, eigenen Fahrzeug und dem beispielsweise nachfolgenden, fremden Fahrzeug durch beispielsweise permanente oder beispielsweise eng getaktete, in diskreten Schritten vorgenommene Messung des Abstands vom beispielsweise vorausfahrenden, eigenen Fahrzeug aus zum beispielsweise nachfolgenden, fremden Fahrzeug vor.

Das Verfahren sieht ferner einen beispielsweise permanenten oder in beispielsweise eng getakteten, beispielsweise mit der Messung synchronisierten diskreten Schritten stattfindenden Vergleich des gemessenen Abstands mit einem einem Mindestabstand proportionalen Abstandsschwellenwert vor.

Mit anderen Worten sieht das Verfahren im Anschluss an die Überwachung des Abstands einen Vergleich der Messung mit einem einem Mindestabstand proportionalen Abstandsschwellenwert vor.

Ein dem dem Mindestabstand proportionalen Abstandsschwellenwert entsprechendes Produkt aus Mindestabstand und einem Proportionalitätsfaktor entspricht einem einzuhaltenden Sicherheitsabstand.

Der Mindestabstand kann abhängig von den herrschenden physikalischen Randbedingungen und/oder von einem momentanen Fahrzustand des eigenen Fahrzeugs und/oder von einem momentanen Fahrzustand des fremden Fahrzeugs und/oder vom physiologisch bedingten Reaktionsvermögen eines durchschnittlichen Fahrers eines Fahrzeugs gewählt sein.

Denkbar ist beispielsweise, dass für unterschiedliche Witterungsbedingungen verschiedene Proportionalitätsfaktoren hinterlegt sind, die beispielsweise in Abhängigkeit von einer Temperatur- und/oder Niederschlags- und/oder Sichtweitenmessung ausgewählt werden können. Alternativ können verschiedene Mindestabstände und/oder verschiedene Abstandsschwellenwerte beispielsweise in Abhängigkeit von einer Temperatur- und/oder Niederschlags- und/oder Sichtweitenmessung ausgewählt werden.

Genauso kann in Bezug auf unterschiedliche Fahrgeschwindigkeiten des eigenen Fahrzeugs und/oder des fremden Fahrzeugs verfahren werden.

Typischerweise werden Fahrgeschwindigkeiten des eigenen Fahrzeugs und des fremden Fahrzeugs direkt oder indirekt berücksichtigt, wenn beispielsweise die Relativgeschwindigkeit zwischen dem eigenen und dem fremden Fahrzeug in die Auswahl des Proportionalitätsfaktors und/oder des Abstandsschwellenwerts einfließt oder mit einfließt.

Das Verfahren sieht darüber hinaus in Abhängigkeit vom Ergebnis des Vergleichs, wenn das Ergebnis des Vergleichs eine Unterschreitung des Abstandsschwellenwerts ist, eine vom beispielsweise vorausfahrenden, eigenen Fahrzeug auf das beispielsweise nachfolgende, fremde Fahrzeug gerichtete Erfassung sowie zumindest temporäre Speicherung zumindest eines Bilds und/oder einer Reihe von Bildern, insbesondere eines Films, etwa in Form einer Auslösung einer Videoaufzeichnung, zumindest desjenigen Teils der Umgebung und/oder des Umfelds des eigenen Fahrzeugs vor, in welchem Teil der Umgebung und/oder des Umfelds des eigenen Fahrzeugs sich das fremde Fahrzeug, dessen gemessener Abstand zum eigenen Fahrzeug den einem Mindestabstand proportionalen Abstandsschwellenwert unterschreitet, befindet.

Mit anderen Worten sieht das Verfahren im Anschluss an den Vergleich der Messung mit einem einem Mindestabstand proportionalen Abstandsschwellenwert vor, dass wenn das Ergebnis der Messung kleiner ist, als der Abstandsschwellenwert, die Erfassung und zumindest zeitweilige Speicherung von einem oder mehreren fotografischen Bildern zumindest desjenigen Teils der Umgebung und/oder des Umfelds des eigenen Fahrzeugs erfolgt, in welchem Teil der Umgebung und/oder des Umfelds des eigenen Fahrzeugs sich das fremde Fahrzeug, dessen gemessener Abstand zum eigenen Fahrzeug den einem Mindestabstand proportionalen Abstandsschwellenwert unterschreitet, befindet.

Dabei ist denkbar, dass die Erfassung von Bildern beispielsweise permanent und/oder wie bei einer Videoaufnahme üblich in zeitlich eng getakteter Folge stattfindet und nur die zumindest temporäre Speicherung der erfassten Bilder bei Unterschreitung des einem Mindestabstand proportionalen Abstandsschwellenwerts vorgenommen wird.

Dies kann beispielsweise synchron mit dem Ergebnis des Vergleichs stattfinden.

Das Verfahren kann vorsehen, eine auf das eigene Fahrzeug einwirkende Beschleunigung zu erfassen, und diese mit einem Beschleunigungsschwellenwert zu vergleichen.

Die Erfassung der Beschleunigung kann beispielsweise durch Abfrage von am eigenen Fahrzeug beispielsweise zur Auslöseentscheidung von Insassenschutzvorrichtungen ohnehin verbauten Kollisionssensoren, oder durch Bezug von zur Auslöseentscheidung von Insassenschutzvorrichtungen verwendeten und/oder aufbereiteten Signalen erfolgen.

Beispielsweise kann hierbei der Beschleunigungsschwellenwert derart festgelegt sein, dass dieser einer Kollisionsstärke entspricht, ab welcher das eigene Fahrzeug bleibenden Schaden nimmt. In diesem Zusammenhang kann der Beschleunigungsschwellenwert richtungsabhängig sein. Hintergrund ist, dass Fahrzeuge vorder- und rückseitig durch in einem niedrigen Kollisionsstärkebereich vor allem in und entgegen der Fahrtrichtung reversibel verformbare Stoßfänger besser geschützt sind und damit höhere Kollisionsstärken unbeschadet überstehen, als beispielsweise an den Seiten und/oder schräg und/oder quer zur Fahrtrichtung.

Ist das Ergebnis des Vergleichs eine Überschreitung des beispielsweise richtungsabhängigen Beschleunigungsschwellenwerts, so sieht das Verfahren eine dauerhafte Speicherung der bis dato temporär gespeicherten Bilder zumindest desjenigen Teils der Umgebung und/oder des Umfelds des eigenen Fahrzeugs vor, in welchem Teil der Umgebung und/oder des Umfelds des eigenen Fahrzeugs sich das fremde Fahrzeug, dessen gemessener Abstand zum eigenen Fahrzeug den einem Mindestabstand proportionalen Abstandsschwellenwert unterschreitet, befindet.

In Verbindung mit einer derartigen Ausgestaltung des Verfahrens ist ersichtlich, dass die temporäre Speicherung von Bildern zumindest desjenigen Teils der Umgebung und/oder des Umfelds des eigenen Fahrzeugs, in welchem Teil der Umgebung und/oder des Umfelds des eigenen Fahrzeugs sich das fremde Fahrzeug, dessen gemessener Abstand zum eigenen Fahrzeug den einem Mindestabstand proportionalen Abstandsschwellenwert unterschreitet, befindet, wenigstens einen Zeitraum umfasst, welcher zumindest von wenigen Sekunden vor einer Kollision, bis zur Auslöseentscheidung von Insassenschutzvorrichtungen reicht.

Beispielsweise kann das Verfahren eine Erfassung eines beispielsweise durch Abfrage eines Beschleunigungssensors erhaltenen Beschleunigungswerts vorsehen, welcher einer vom eigenen Fahrzeug momentan erfahrenen Beschleunigung proportional ist.

Die Erfassung kann alternativ oder zusätzlich zu der bereits angedeuteten Abfrage eines beispielsweise in eine Fahrzeugleuchte integrierten Beschleunigungssensors eine Erlangung eines entsprechenden Beschleunigungswerts aus einem Bordnetzwerk des eigenen Fahrzeugs umfassen.

Geeignet ist beispielsweise in diesem Zusammenhang ein Signal oder ein Wert eines oder mehrerer Kollisionssensoren und/oder ein Auslösesignal oder ein Auslösewert einer Insassenschutzeinrichtung des eigenen Fahrzeugs, insbesondere eines oder mehrerer Airbags.

In letzterem Fall, wenn also bereits ein Auslösesignal oder -wert vorliegt, kann auf einen Vergleich mit einem Beschleunigungsschwellenwert verzichtet werden und bei Vorliegen des Auslösesignals oder -werts die Permanentspeicherung des bis dato erfassten Verkehrsgeschehens im Umfeld des eigenen Fahrzeugs zur Beweiserfassung vorgenommen werden.

Vorteilhaft erfolgt auch eine permanente Speicherung der bis dato erfassten Bilder bei Trennung von einer Stromversorgung.

Sind beispielsweise alle zur Durchführung des Verfahrens erforderlichen Komponenten in einer Fahrzeugleuchte untergebracht und wird diese aufgrund eines Unfalls vom Rest des eigenen Fahrzeugs getrennt, so stellt eine permanente Speicherung der bis dato erfassten Bilder bei Trennung von der Stromversorgung ähnlich einem umgangssprachlich auch als Black Box bezeichneten Flugdatenschreiber eine Rekonstruktionsmöglichkeit des Unfallhergangs sicher.

Das Verfahren sieht vor, dass eine zumindest zur Erfassung von einem oder mehreren fotografischen Bildern zumindest desjenigen Teils der Umgebung und/oder des Umfelds des eigenen Fahrzeugs vorgesehene Kamera zumindest bei Unterschreitung eines Abstandsschwellenwerts läuft.

Der gemessene Abstand kann in das von der Kamera erfasste Bild eingeblendet werden.

Ein zur Speicherung von von der Kamera erfasster Bilder vorgesehener Speicher kann beispielsweise zyklisch überschrieben werden, solange keine Kollision erfasst worden ist. Beispielsweise ist ein Überschreibzyklus des Speichers alle 60 s denkbar. Demnach werden aller erfassten und im Speicher abgelegten Bilder alle 60 s mit einem neuen Bild überschrieben.

Besonders vorteilhaft sieht das Verfahren eine Speicherung der gewonnenen Abstands-, Geschwindigkeits-, Mindestabstands- und Bilddaten vor.

Ein erfindungsgemäßes Verfahren sieht demnach vor, vom insbesondere vorausfahrenden, eigenen Fahrzeug aus einen Abstand zum insbesondere nachfolgenden, fremden Fahrzeug zu erfassen. Anschließend sieht das Verfahren vor, den erfassten Abstand mit einem einem mindestens einzuhaltenden Sicherheitsabstand entsprechenden Abstandsschwellenwert zu vergleichen. Ist das Ergebnis des Vergleichs, dass der erfasste Abstand größer ist, als der Abstandsschwellenwert, so kann das Verfahren zumindest so lange erneut von vorn beginnen, wie das eigene Fahrzeug in Betrieb ist. Ist das Ergebnis des Vergleichs hingegen, dass der erfasste Abstand kleiner ist, als der Abstandsschwellenwert, so sieht das Verfahren dann eine Erfassung und zumindest zeitweilige Speicherung von einem oder mehreren fotografischen Bildern zumindest desjenigen Teils der Umgebung und/oder des Umfelds des eigenen Fahrzeugs vor, in welchem Teil der Umgebung und/oder des Umfelds des eigenen Fahrzeugs sich das fremde Fahrzeug, dessen gemessener Abstand zum eigenen Fahrzeug den einem Mindestabstand proportionalen Abstandsschwellenwert unterschreitet, befindet.

Vereinfacht ausgedrückt vergleicht das eigene Fahrzeug den tatsächlichen, realen Abstand zu dem nachfolgenden, fremden Fahrzeug mit einem beispielsweise auf Grund von Parametern wie Geschwindigkeit, eigene Bremsleistung, durchschnittlicher Reaktionsweg, Fahrbahnverhältnisse, etc. ermittelten Mindestabstand, der beispielsweise auch die Geschwindigkeit und Geschwindigkeitsänderung des nachkommenden fremden Fahrzeugs berücksichtigen kann.

Wird nun der Abstand kleiner als ein dem Mindestabstand proportionaler Sicherheitsabstand erfolgt die Erfassung und zumindest zeitweilige Speicherung von einem oder mehreren fotografischen Bildern zumindest desjenigen Teils der Umgebung und/oder des Umfelds des eigenen Fahrzeugs vor, in welchem Teil der Umgebung und/oder des Umfelds des eigenen Fahrzeugs sich das fremde Fahrzeug, dessen gemessener Abstand zum eigenen Fahrzeug den einem Mindestabstand proportionalen Abstandsschwellenwert unterschreitet, befindet.

Das Verfahren kann darüber hinaus vorsehen, den Abstandsschwellenwert in Abhängigkeit von Umgebungsbedingungen zu verändern und hierdurch anzupassen.

Denkbare Umgebungsbedingungen können beispielsweise Witterungsbedingungen umfassen, wie etwa - ohne Anspruch auf Vollständigkeit der nachfolgenden Auflistung - Außentemperatur, Sichtweite, Nässe, Glätte, Gefälle, Steigung sowie Kombinationen hiervon.

Alternativ oder zusätzlich können denkbare Umgebungsbedingungen beispielsweise Verkehrsbedingungen umfassen, wie etwa - ohne Anspruch auf Vollständigkeit der nachfolgenden Auflistung - Fahrgeschwindigkeit des eigenen Fahrzeugs, Relativgeschwindigkeit des fremden Fahrzeugs zum eigenen Fahrzeug, Geschwindigkeitsänderung des eigenen Fahrzeugs, Geschwindigkeitsänderung des fremden Fahrzeugs, Abstand zu einem vorausfahrenden, weiteren fremden Fahrzeug, Kolonnenfahrt, Stau, Verkehrszeichen (dynamische Geschwindigkeitsbeschränkungen, Ampeln), sowie Kombinationen hiervon.

Der Abstandsschwellenwert kann hierbei durch einen veränderlichen Proportionalitätsfaktor, der mit einem sich zumindest anhand physikalischer Randbedingungen ergebenden Mindestabstand multipliziert wird, kontinuierlich oder in diskreten Schritten, beispielsweise anhand von in einem Datenspeicher abgelegten Tabellenwerten angepasst beziehungsweise verändert werden.

Alternativ kann der Abstandsschwellenwert selbst aus einer Reihe von beispielsweise in einem Datenspeicher abgelegten Tabellenwerten anhand von Umgebungsbedingungen ausgewählt werden.

Der dem Sicherheitsabstand und dem Abstandsschwellenwert proportionale, erforderliche Mindestabstand kann von vielen Faktoren abhängen. Geschwindigkeit, Bremswirkung des Fahrzeuges, technische Ausstattung, Fahrbahn, Temperatur, Witterung, Bereifung, etc.. All diese Faktoren könnten in der Abstandsbewertung mit einfließen. Ebenso wie der Umstand, dass der Mindestabstand von einer Vollbremsung ausgeht. Beispielsweise kann die Erfassung und zumindest zeitweilige Speicherung von einem oder mehreren fotografischen Bildern zumindest desjenigen Teils der Umgebung und/oder des Umfelds des eigenen Fahrzeugs, in welchem Teil der Umgebung und/oder des Umfelds des eigenen Fahrzeugs sich das fremde Fahrzeug, dessen gemessener Abstand zum eigenen Fahrzeug den einem Mindestabstand proportionalen Abstandsschwellenwert unterschreitet, befindet, auch erst bei einer deutlicheren Unterschreitung, wie z.B. < 70% des erforderlichen Mindestabstandes vorgenommen werden.

Die Abstandsmessung kann in die Fahrzeugleuchte des eigenen Fahrzeugs integriert sein. Zur Abstandsmessung eingesetzte Mittel können einen oder mehrere Abstandssensoren sowie mindestens eine hiermit sowie mit einer zur Erfassung von einem oder mehreren fotografischen Bildern zumindest desjenigen Teils der Umgebung und/oder des Umfelds des eigenen Fahrzeugs, in welchem Teil der Umgebung und/oder des Umfelds des eigenen Fahrzeugs sich das fremde Fahrzeug befindet, dessen gemessener Abstand zum eigenen Fahrzeug den einem Mindestabstand proportionalen Abstandsschwellenwert unterschreitet, vorgesehene Kamera verbundenen Auswerte- und Steuereinheit umfassen.

Eine zumindest zeitweilige Speicherung der fotografischen Bilder kann in der Kamera selbst erfolgen und/oder in einer mit der Auswerte- und Steuereinheit sowie der Kamera verbundenen und/oder in der Auswerte- und Steuereinheit integrierten Speichereinheit.

Dies führt unmittelbar zu einem nachfolgend beschriebenen, zweiten Gegenstand der Erfindung.

Dieser betrifft eine zur Ausführung eines voranstehend beschriebenen Verfahrens geeignete Fahrzeugleuchte.

Die Fahrzeugleuchte umfasst ein Leuchtengehäuse und wenigstens eine Lichtscheibe, welche zumindest teilweise einen Leuchteninnenraum umgeben. Mit anderen Worten umfasst die Fahrzeugleuchte einen von einem Leuchtengehäuse und wenigstens einer Lichtscheibe zumindest teilweise umgebenen Leuchteninnenraum.

Die Fahrzeugleuchte umfasst mindestens ein in dem Leuchteninnenraum wenigstens zum Teil beherbergtes Leuchtmittel mit mindestens einer Lichtquelle zur Erfüllung zumindest einer Lichtfunktion der Fahrzeugleuchte.

Ferner umfasst die Fahrzeugleuchte mindestens eine in zumindest einen Teil des Leuchteninnenraums wenigstens teilweise beherbergte Kamera. Die Kamera ist auf eine dem Leuchtengehäuse abgewandte Umgebung gerichtet.

Vorzugsweise blickt die Kamera durch eine Partie der Lichtscheibe oder durch eine der Lichtscheibe benachbarte Partie aus dem Leuchteninnenraum heraus in die Umgebung.

Außerdem umfasst die Fahrzeugleuchte mit der Kamera verbundene Speichermittel zur Speicherung von von der Kamera erfasster Bilder der Umgebung.

Darüber hinaus umfasst die Fahrzeugleuchte Mittel zur Abstandsmessung zu einem fremden Fahrzeug in denjenigem Teil der Umgebung und/oder des Umfelds eines mit der Fahrzeugleuchte ausgestatteten eigenen Fahrzeugs, in welchen die Kamera blickt.

Die Mittel zur Abstandsmessung sind demnach zur Erfassung eines Abstands zu einem fremden Fahrzeug in der von der mindestens einen in dem Leuchteninnenraum beherbergten Kamera einsehbaren Umgebung der Fahrzeugleuchte vorgesehen.

Die Mittel zur Abstandsmessung erzeugen ein Ausgangssignal, welches einem Abstand eines mit der Fahrzeugleuchte ausgestatteten eigenen Fahrzeugs zu einem diesem nachfolgenden, fremden Fahrzeug proportional ist, oder dem sonst wie der Abstand zu entnehmen ist.

Ferner umfasst die Fahrzeugleuchte mit den Mitteln zur Abstandsmessung verbundene Mittel zum Vergleich des gemessenen Abstands mit einem Abstandsschwellenwert.

Liegt das Ergebnis der Abstandsmessung nicht in einem Längen- oder Abstandsmaß vor, so vergleichen die Mittel zum Vergleich das Ausgangssignal der Mittel zur Abstandsmessung mit einem dem Abstandsschwellenwert entsprechenden Schwellenwert für das Ausgangssignal. Das Ausgangssignal und der Schwellenwert können beide analog oder digital vorliegen, oder gemischt.

Die Mittel zum Vergleich sind mit der Kamera und/oder den Speichermitteln derart verbunden, dass sie eine Aufnahme von Bildern der Umgebung durch die Kamera und/oder eine Speicherung der von der Kamera erfassten Bildern der Umgebung auslösen, wenn das Ergebnis des Vergleichs ist, dass der gemessene Abstand kleiner ist, als der Abstandsschwellenwert.

Die Fahrzeugleuchte kann darüber hinaus Datenspeichermittel zur Speicherung zumindest eines Abstandsschwellenwerts und/oder eines Proportionalitätsfaktors umfassen.

Ferner kann die Fahrzeugleuchte Mittel zur Erfassung und/oder Erlangung von Umgebungsbedingungen sowie Mittel zur Veränderung des Abstandsschwellenwerts in Abhängigkeit von den Umgebungsbedingungen umfassen.

Zur Erfassung von Umgebungsbedingungen können beispielsweise Sensoren vorgesehen sein ,welche Temperatur und/oder Sichtweite und/oder Niederschlagsmenge zu erfassen in der Lage sind.

Zur Erlangung von Umgebungsbedingungen hingegen kann eine Schnittstelle zu einem entsprechende Informationen über Umgebungsbedingungen fahrzeugseitig vorhaltenden Bordnetzwerk vorgesehen sein.

Wichtig ist in diesem Zusammenhang hervorzuheben, dass alternativ oder zusätzlich momentane Fahrzustände zumindest fremder Fahrzeuge in der Umgebung des eigenen Fahrzeugs zumindest einen oder mehrere Teile von Umgebungsbedingungen bilden können, welche in eine Veränderung des Abstandsschwellenwerts mit einfließen können. Auch Fahrzustände des eigenen Fahrzeugs können in eine Veränderung des Schwellenwerts mit einfließen. Ohne Anspruch auf Vollständigkeit können dies momentane Geschwindigkeit momentane Bremsverzögerung, momentane Beschleunigung, momentaner Abstand zum Vordermann des eigenen Fahrzeugs, momentane Geschwindigkeit momentane Bremsverzögerung, momentane Beschleunigung, momentaner Abstand eines fremden Fahrzeugs zum Vordermann und/oder zum Nachfolgenden sowie Kombinationen hiervon sein.

Die Fahrzeugleuchte kann einen Speicher zum zumindest kurzzeitigen Betrieb wenigstens der Kamera und/oder der Speichermittel der Fahrzeugleuchte benötigter elektrischer Energie umfassen. Dieser kann beispielsweise kapazitiver Natur sein. Er kann beispielsweise während einer im normalen Gebrauch eines Fahrzeugs stattfindenden regulären Aktivierung einer durch die Lichtquelle eines Leuchtmittels verwirklichten Lichtfunktion aufgeladen werden.

Darüber hinaus kann die Fahrzeugleuchte Mittel zur Erfassung und/oder Erlangung einer momentan auf das mit ihr verbundene Fahrzeug und/oder sie selbst einwirkenden Beschleunigung umfassen. Ist die Beschleunigung höher, als eine bei einer zur dauerhaften Schädigung des Fahrzeugs und/oder der Fahrzeugleuchte erforderlichen Kollisionsstärke auftretende Beschleunigung, so können die Mittel zur Erfassung einer momentan auf das mit ihr verbundene Fahrzeug und/oder sie selbst einwirkenden Beschleunigung eine dauerhafte Speicherung der bis dato in einem vorangehenden, vorgegebenen Zeitraum von beispielsweise 5 s, ..., 60 s erfassten Bilder veranlassen.

Zur Erlangung von auf das mit der Fahrzeugleuchte verbundene Fahrzeug und/oder sie selbst einwirkenden Beschleunigungen kann eine Schnittstelle zu einem entsprechende Informationen fahrzeugseitig vorhaltenden Bordnetzwerk vorgesehen sein.

Beispielsweise kann die Fahrzeugleuchte einen Beschleunigungssensor aufweisen, welcher ein einer vom eigenen Fahrzeug momentan erfahrenen Beschleunigung proportionales Beschleunigungssignal ausgibt.

Die Erfassung kann alternativ oder zusätzlich zu der bereits angedeuteten Abfrage eines in die Fahrzeugleuchte integrierten Beschleunigungssensors eine Erlangung eines entsprechenden Beschleunigungswerts aus einem Bordnetzwerk des eigenen Fahrzeugs umfassen. Entsprechend kann die Fahrzeugleuchte mit einer Schnittstelle mit einem Bordnetzwerk eines eigenen Fahrzeugs versehen sein.

Geeignet ist beispielsweise in diesem Zusammenhang ein Signal oder ein Wert eines oder mehrerer Kollisionssensoren und/oder ein Auslösesignal oder ein Auslösewert einer Insassenschutzeinrichtung des eigenen Fahrzeugs, insbesondere eines oder mehrerer Airbags.

In letzterem Fall, wenn also bereits ein Auslösesignal oder -wert vorliegt, kann auf einen Vergleich mit einem Beschleunigungsschwellenwert verzichtet werden und bei Vorliegen des Auslösesignals oder -werts eine Permanentspeicherung des bis dato erfassten Verkehrsgeschehens im Umfeld des eigenen Fahrzeugs zur Beweiserfassung vorgenommen werden.

Die Fahrzeugleuchte mit integrierter Kamera und mit integriertem Abstandssensor sowie Auswertungs- und Speichermitteln ist vorteilhaft als Heckleuchte ausgebildet.

Es ist ersichtlich, dass die Erfindung die gestellte Aufgabe unter vollständiger Beseitigung der Nachteile des Standes der Technik durch eine Abstandsmessung vom eigenen, insbesondere vorausfahrenden Fahrzeug aus zu einem fremden, insbesondere nachfolgenden und/oder aufschließenden Fahrzeug löst, wobei bei einer durch einen Vergleich des gemessenen Abstands mit einem Abstandsschwellenwert festgestellten Unterschreitung eines vorgegebenen Mindestabstands und/oder eines dem Mindestabstand proportionalen Sicherheitsabstands eine Kameraaufzeichnung einhergehend mit einer Erfassung und zumindest zeitweiligen Speicherung von einem oder mehreren beispielsweise fotografischen Bildern zumindest desjenigen Teils der Umgebung und/oder des Umfelds des eigenen Fahrzeugs aktiviert wird, in welchem Teil der Umgebung und/oder des Umfelds des eigenen Fahrzeugs sich das fremde Fahrzeug, dessen gemessener Abstand zum eigenen Fahrzeug den Abstandsschwellenwert unterschreitet, befindet.

Zusammengefasst sieht die Erfindung eine Kombination von Geschwindigkeitserfassung, Abstandsmessung und Bilderfassung samt Speicher vor, welche in eine beispielsweise als eine Heckleuchte ausgeführte Fahrzeugleuchte integriert werden, mit dem Ziel der Dokumentation eines Unfallherganges oder eines möglichen Fehlverhaltens wie etwa massivem Auffahren.

Aus der Geschwindigkeit des eigenen Fahrzeugs und/oder einer Geschwindigkeitsdifferenz zwischen dem eigenen Fahrzeug und einem beispielsweise zu diesem aufschließenden fremden beziehungsweise nachkommenden Fahrzeug ermittelt ein in die Fahrzeugleuchte integriertes System aus das voranstehend beschriebene Verfahren umsetzenden Mitteln den Mindestabstand, welcher mit dem tatsächlichen Abstand zum nachkommenden Fahrzeug verglichen wird. Bei einer gefährlichen Bewertung werden ähnlich wie bei einer Radarfalle Bilder geschossen, oder ein Film ausgelöst.

Beispielsweise bei einer Kamera, deren Speicher permanent überschrieben wird, könnten die als gefährlich erkannten Sekunden auch mit einer höheren Auflösung gefilmt werden.

Das Verfahren und die Fahrzeugleuchte können außerdem eine Linsenreinigung der Kamera vorsehen.

Beispielsweise kann es sich bei der Fahrzeugleuchte um eine hoch gesetzte dritte Bremsleuchte, ein so genanntes Central, High-Mounted Braking Light, handeln. Dies hat den zusätzlichen Vorteil, dass der Heckscheibenwischer die Kamera-Linse mit sauber hält.

Ebenso ist denkbar, eine solche Kamera in die Frontscheinwerfer zu integrieren, gegebenenfalls gekoppelt mit einer Sensorik, die Vollbremsungen erkennt.

Die Erfindung ermöglicht auch eine Nachrüstung bestehender Fahrzeuge und erhöht die Verkehrssicherheit ohne notwendige technische Einrichtungen der anderen Verkehrsteilnehmer.

Vorteile der Erfindung gegenüber dem Stand der Technik sind unter Anderem, dass während des Betriebs des eigenen Fahrzeugs eine mögliche Gefahrensituation durch die Unterschreitung des Mindestabstandes eines insbesondere nachfolgenden, fremden Fahrzeugs zum eigenen Fahrzeug erkannt, und dies durch ein oder mehrere Bilder dokumentiert wird, um im Falle eines Unfalls den Unfallhergang rekonstruieren zu können.

Bislang ist es so, dass die Polizei überwiegend stationär misst. Wenn dies dynamisch erfolgt, dann nützt sie die Bildinformationen und versuchen über Bodenmarkierungen und Wagenlängen die Abstände zu schätzen.

Ein zu geringer Abstand zu dem vorausfahrenden Fahrzeug ist meist der Grund für Auffahrunfälle. Einige Fahrer nützten das knappe Auffahren um das vorausfahrende Fahrzeug einzuschüchtern, zu bedrohen und gefährden dadurch sich selbst und andere in einer manchmal sträflichen Art und Weise.

Dies nachzuweisen ist aber schwierig und dass ein Gesetzeshüter so jemanden auf frischer Tat ertappt ist selten. Wenn man einerseits filmt und gleichzeitig die Geschwindigkeit, Abstand und Verzögerung erfasst, dokumentiert man die letzten Sekunden eines Auffahrunfalls und/oder hält man den Vorgang einer groben Gefährdung der eigenen Person fest und hat hierdurch auch die Möglichkeit, mit Unterstützung des dokumentierten und gespeicherten Bildmaterials durch die Möglichkeit der Angabe von Zeit, Ort, Fahrzeug, Kennzeichen, Fahrer, Fahrverhalten, Verkehrs- und Fahrbahnsituation, Anzeige zu erstatten.

Da die Bilder von Frontkameras im Ermessen des Gerichtes bereits als Beweismittel zugelassen wurden, ist anzunehmen, dass es sich auch im Heckbereich ähnlich verhalten wird.

Ist beispielsweise von hinten erkennbar, dass das eigene Fahrzeug mit einer Fahrzeugleuchte ausgestattet ist, welche ein entsprechendes System aus das voranstehend beschriebene Verfahren umsetzenden Mitteln aufweist, hat dies insbesondere im Hinblick auf aggressives Fahrverhalten eines aufschließenden Fahrzeugs auch noch zusätzlich eine abschreckende, mahnende Wirkung. Dem entsprechend erkennbar ausgestatteten eigenen Fahrzeug wird wahrscheinlich, nach bekannt werden des Systems, weniger oft gefährdend von hinten aufgefahren.

Alternativ oder zusätzlich kann die Fahrzeugleuchte und/oder ein in diese integriertes und/oder das voranstehend beschriebene Verfahren verwirklichendes System für Einsatzfahrzeuge der Zivilpolizei vorgesehen sein, welche verdeckt arbeitet um aggressiv dicht auffahrende Fahrer zu entlarven.

Die Fahrzeugleuchte kann einzelne oder eine Kombination der zuvor und/oder nachfolgend in Verbindung mit der Erfindung und/oder dem Verfahren beschriebene Merkmale aufweisen, ebenso wie das Verfahren einzelne oder eine Kombination mehrerer zuvor und/oder nachfolgend in Verbindung mit der Erfindung und/oder der Fahrzeugleuchte beschriebene Merkmale aufweisen und/oder verwirklichen kann.

Die Fahrzeugleuchte und/oder das Verfahren können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene und/oder in den Ansprüchen genannte Merkmale aufweisen.

Zusätzliche, über die vollständige Lösung der gestellten Aufgabe und/oder über die voran zu den einzelnen Merkmalen genannten Vorteile hinausgehende Vorteile gegenüber dem Stand der Technik sind in der nachfolgenden Figurenbeschreibung erwähnt.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: eine erste Momentaufnahme einer Verkehrssituation mit einem eigenen Fahrzeug und einem dem eigenen Fahrzeug in ausreichendem Sicherheitsabstand nachfolgenden fremden Fahrzeug in einer Seitenansicht.
- Fig. 2: eine zweite Momentaufnahme einer Verkehrssituation mit einem eigenen Fahrzeug und einem dem eigenen Fahrzeug unter Unterschreitung eines Sicherheitsabstands nachfolgenden fremden Fahrzeug in einer Seitenansicht.
- Fig. 3: eine dritte Momentaufnahme einer Verkehrssituation mit einem eigenen Fahrzeug und einem nach Unterschreitung eines Sicherheitsabstands dem eigenen Fahrzeug unter Verursachung eines Heckaufpralls aufgefahrenen fremden Fahrzeug in einer Seitenansicht.
- Fig. 4: ein Ablaufdiagramm eines Verfahrens zur Beweiserfassung bei Unterschreitung eines Sicherheitsabstands zwischen aufeinander folgenden Fahrzeugen, einem eigenen Fahrzeug und insbesondere einem diesem nachfolgenden, fremden Fahrzeug.

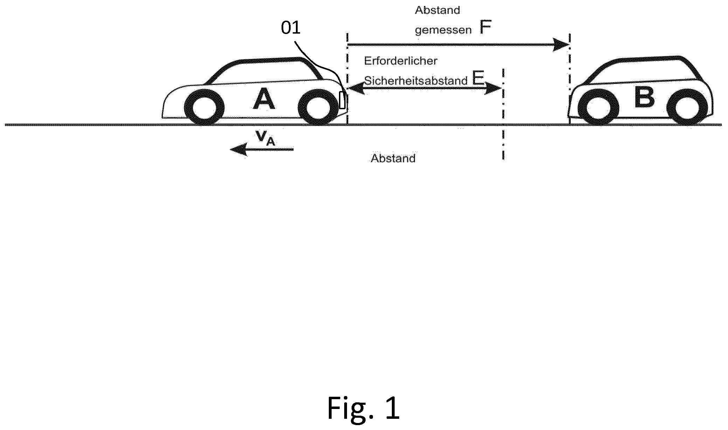

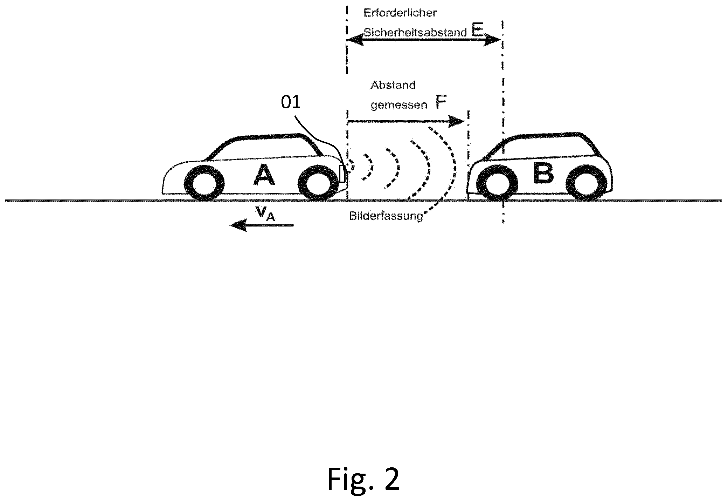

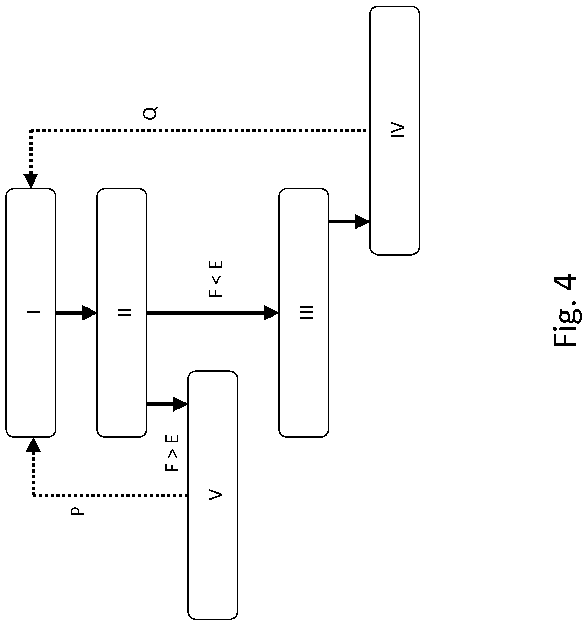

Ein in Fig. 4 in seinem Ablauf dargestelltes Verfahren zur Beweiserfassung bei Unterschreitung eines Sicherheitsabstands zwischen in Fig. 1 und in Fig. 2 dargestellt aufeinander folgenden Fahrzeugen A, B, einem eigenen Fahrzeug A und wenigstens einem fremden Fahrzeug B in dessen Umgebung und/oder Umfeld, in einem ersten Verfahrensschritt I eine kurz als Abstandsmessung bezeichnete Erfassung beziehungsweise Messung vom eigenen, insbesondere vorausfahrenden Fahrzeug A aus eines Abstands F des eigenen Fahrzeugs A zu einem fremden, insbesondere dem eigenen Fahrzeug A nachfolgenden und/oder zum eigenen Fahrzeug A aufschließenden Fahrzeug B, anschließend in einem zweiten Verfahrensschritt II einen Vergleich des gemessenen Abstands F mit einem einem Sicherheitsabstand E proportionalen Abstandsschwellenwert, wobei bei einer durch einen Vergleich des gemessenen Abstands F mit dem Abstandsschwellenwert festgestellten Unterschreitung eines vorgegebenen Mindestabstands und/oder eines dem Mindestabstand proportionalen Sicherheitsabstands E in einem dritten Verfahrensschritt III eine Kameraaufzeichnung einhergehend mit einer Erfassung und zumindest zeitweiligen Speicherung von einem oder mehreren beispielsweise fotografischen Bildern zumindest desjenigen Teils der Umgebung und/oder des Umfelds des eigenen Fahrzeugs A aktiviert wird, in welchem Teil der Umgebung und/oder des Umfelds des eigenen Fahrzeugs A sich das fremde Fahrzeug B, dessen gemessener Abstand F zum eigenen Fahrzeug A den dem Sicherheitsabstand E proportionalen Abstandsschwellenwert unterschreitet, befindet.

Ein dem dem Mindestabstand proportionalen Abstandsschwellenwert entsprechendes Produkt aus Mindestabstand und einem Proportionalitätsfaktor entspricht dem einzuhaltenden Sicherheitsabstand E.

Bei den Fahrzeugen A, B handelt es sich insbesondere um zur Teilnahme am Straßenverkehr vorgesehene und/oder zugelassene Automobile und/oder Kraftfahrzeuge.

Beispielsweise kann es sich wie in Fig. 1 und in Fig. 2 dargestellt bei den aufeinander folgenden Fahrzeugen A, B um ein eigenes Fahrzeug A und ein dem eigenen Fahrzeug A nachfolgendes, fremdes Fahrzeug B handeln.

Das Verfahren sieht im zunächst stattfindenden ersten Verfahrensschritt I vor, vom beispielsweise vorausfahrenden, eigenen Fahrzeug A aus einen Abstand F zum beispielsweise nachfolgenden, fremden Fahrzeug B zu erfassen.

Dies kann beispielsweise durch beispielsweise am Heck des eigenen Fahrzeugs A angeordnete geeignete Abstandssensoren, wie etwa Ultraschallsensoren erfolgen. Ebenfalls geeignet ist eine Abstandsmessung per RADAR (Radio Detection And Ranging) oder per LIDAR (Light Detection And Ranging).

Das Verfahren kann hierbei vorsehen, dass die durch die Messung beziehungsweise Erfassung des Abstands F vom eigenen Fahrzeug A zum diesem nachfolgenden, fremden Fahrzeug B erfolgende Überwachung des Abstands F im ersten Verfahrensschritt I permanent oder in beispielsweise eng getakteten, diskreten Schritten erfolgt.

Mit anderen Worten sieht das Verfahren im zunächst stattfindenden ersten Verfahrensschritt I eine Überwachung des Abstands F zwischen dem beispielsweise vorausfahrenden, eigenen Fahrzeug A und dem beispielsweise nachfolgenden, fremden Fahrzeug B durch beispielsweise permanente oder beispielsweise eng getaktete, in diskreten Schritten vorgenommene Messung des Abstands F vom beispielsweise vorausfahrenden, eigenen Fahrzeug A aus zum beispielsweise nachfolgenden, fremden Fahrzeug B vor.

Vorteilhaft sind zur Abstandsmessung vorgesehene Mittel zur Erfassung eines Abstands F zu einem fremden Fahrzeug B, wie etwa der oder die erwähnten Abstandssensoren umfassende Mittel, in einer oder in mehreren, am Heck des eigenen Fahrzeugs A angeordneten Fahrzeugleuchten 01 beherbergt. Hierdurch sind diese einerseits vor Umwelteinflüssen geschützt beherbergt und andererseits ergeben sich kurze und damit ausfallsicherere Verbindungsleitungen zu den zur Ausführung der weiteren Verfahrensschritte erforderlichen Einrichtungen und Mitteln.

In einem sich an den ersten Verfahrensschritt I anschließenden zweiten Verfahrensschritt II sieht das Verfahren vor, den erfassten Abstand mit einem einem mindestens einzuhaltenden Sicherheitsabstand E entsprechenden Abstandsschwellenwert zu vergleichen.

Der im zweiten Verfahrensschritt II stattfindende Vergleich des gemessenen Abstands F mit dem einem Mindestabstand proportionalen und einem mindestens einzuhaltenden Sicherheitsabstand E entsprechenden Abstandsschwellenwert kann beispielsweise permanent oder in beispielsweise eng getakteten, beispielsweise mit der Messung synchronisierten diskreten Schritten stattfinden.

Das eigene Fahrzeug A, vorzugsweise mindestens eine vorteilhaft als Heckleuchte ausgebildete, am Heck des eigenen Fahrzeugs A angeordnete Fahrzeugleuchte 01, ist zur Durchführung des im zweiten Verfahrensschritt stattfindenden Vergleichs vorteilhaft mit einen oder mehrere Mikroprozessoren sowie gegebenenfalls eine oder mehrere Speichereinrichtungen umfassenden Mitteln zum Vergleich des gemessenen Abstands F mit einem einem mindestens einzuhaltenden Sicherheitsabstand E - bei einem Proportionalitätsfaktor von 1 - entsprechenden oder allgemeiner diesem proportionalen Abstandsschwellenwert ausgestattet.

Mit anderen Worten sieht das Verfahren im zweiten Verfahrensschritt II im Anschluss an die im ersten Verfahrensschritt I stattfindende Überwachung des Abstands F einen Vergleich der Messung mit einem einem Sicherheitsabstand E proportionalen Abstandsschwellenwert vor.

Wenn das Ergebnis des im zweiten Verfahrensschritt II stattfindenden Vergleichs ist, dass eine Unterschreitung des Abstandsschwellenwerts vorliegt, wobei der erfasste Abstand F kleiner ist, als der Abstandsschwellenwert, sieht das Verfahren in einem sich dann an den zweiten Verfahrensschritt II anschließenden dritten Verfahrensschritt III eine vom beispielsweise vorausfahrenden, eigenen Fahrzeug A auf das beispielsweise nachfolgende, fremde Fahrzeug B gerichtete Erfassung sowie zumindest temporäre Speicherung zumindest eines Bilds und/oder einer Reihe von Bildern, insbesondere eines Films, etwa in Form einer Auslösung einer Videoaufzeichnung, zumindest desjenigen Teils der Umgebung und/oder des Umfelds des eigenen Fahrzeugs A vor, in welchem Teil der Umgebung und/oder des Umfelds des eigenen Fahrzeugs A sich das fremde Fahrzeug B, dessen gemessener Abstand F zum eigenen Fahrzeug A den dem Sicherheitsabstand E proportionalen Abstandsschwellenwert unterschreitet, befindet.

Mit anderen Worten sieht das Verfahren im dritten Verfahrensschritt III im Anschluss an den im zweiten Verfahrensschritt II stattfindenden Vergleich der Messung mit einem einem Mindestabstand proportionalen Abstandsschwellenwert vor, dass wenn das Ergebnis der Messung kleiner ist, als der Abstandsschwellenwert, die Erfassung und zumindest zeitweilige Speicherung von einem oder mehreren fotografischen Bildern zumindest desjenigen Teils der Umgebung und/oder des Umfelds des eigenen Fahrzeugs A erfolgt, in welchem Teil der Umgebung und/oder des Umfelds des eigenen Fahrzeugs A sich das fremde Fahrzeug B, dessen gemessener Abstand F zum eigenen Fahrzeug A den einem Mindestabstand proportionalen Abstandsschwellenwert unterschreitet, befindet.

Die Erfassung von Bildern findet beispielsweise fotografisch in Form von Einzelbildern oder beispielsweise permanent und/oder wie bei einer Videoaufnahme üblich in zeitlich eng getakteter Folge statt.

Das eigene Fahrzeug A, vorzugsweise mindestens eine vorteilhaft als Heckleuchte ausgebildete, am Heck des eigenen Fahrzeugs A angeordnete Fahrzeugleuchte 01, ist zur Durchführung der im dritten Verfahrensschritt III stattfindenden Erfassung und zumindest zeitweilige Speicherung von einem oder mehreren fotografischen Bildern zumindest desjenigen Teils der Umgebung und/oder des Umfelds des eigenen Fahrzeugs A, in welchem Teil der Umgebung und/oder des Umfelds des eigenen Fahrzeugs A sich das fremde Fahrzeug B, dessen gemessener Abstand F zum eigenen Fahrzeug A den einem Mindestabstand proportionalen Abstandsschwellenwert unterschreitet, befindet, vorteilhaft mit beispielsweise einer oder mehreren Kameras sowie Speichermitteln ausgestattet, die wiederum vorteilhaft mit den beispielsweise Mikroprozessoren sowie Speichereinrichtungen umfassenden Mitteln zur Ausführung des Vergleichs im zweiten Verfahrensschritt II geeigneten Mitteln zum Vergleich des gemessenen Abstands mit einem Abstandsschwellenwert verbunden sein können.

Das Verfahren kann hiernach im dritten Verfahrensschritt III vorsehen, dass eine zumindest zur Erfassung von einem oder mehreren fotografischen Bildern zumindest desjenigen Teils der Umgebung und/oder des Umfelds des eigenen Fahrzeugs A vorgesehene Kamera zumindest bei Unterschreitung eines einem Sicherheitsabstand E proportionalen Abstandsschwellenwerts läuft.

Die Speicherung oder zusätzlich die Erfassung der Bilder kann beispielsweise synchron mit dem Ergebnis des Vergleichs stattfinden.

Darüber hinaus können die zur Ausführung des dritten Verfahrensschritts III erforderlichen beziehungsweise vorgesehenen Mittel einen Energiespeicher zur Bereitstellung zum gegebenenfalls bei Unterschreitung des Mindestabstands gegebenenfalls notwendigen Aktivieren der Erfassung und Speicherung von Bildern notwendiger Energie umfassen.

In einem sich an den dritten Verfahrensschritt III anschließenden vierten Verfahrensschritt IV kann das Verfahren enden.

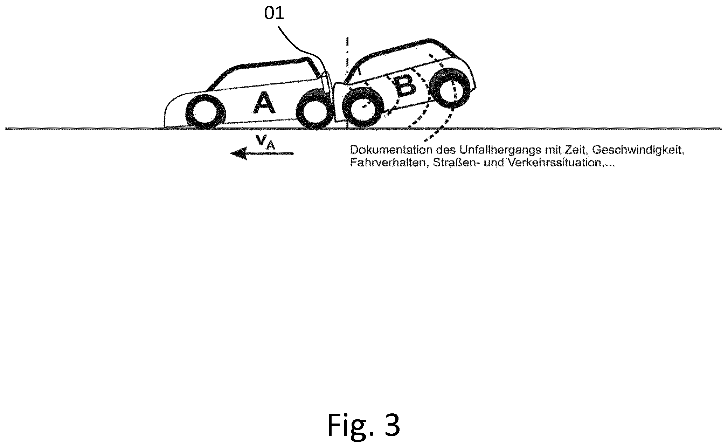

Alternativ kann das Verfahren im Anschluss an den vierten Verfahrensschritt IV wie durch einen in Fig. 3 gestrichelt dargestellten Pfeil Q angedeutet zumindest so lange mit dem ersten Verfahrensschritt I erneut von vorn beginnen, so lange das eigene Fahrzeug A in Betrieb ist und damit aktiv am Verkehrsgeschehen teilnimmt.

In diesem Fall kann im vierten Verfahrensschritt IV beispielsweise eine Abfrage erfolgen, ob das eigene Fahrzeug A sich in Betrieb befindet, oder nicht. Dies kann beispielsweise durch Abfrage einer Stellung eines Zündschlüssels und/oder durch Abfrage einer Betätigung einer Start-Stopp-Taste festgestellt werden.

Wenn das Ergebnis des im zweiten Verfahrensschritt II stattfindenden Vergleichs ist, dass keine Unterschreitung des Abstandsschwellenwerts vorliegt, wobei der erfasste Abstand F größer ist, als der Abstandsschwellenwert, endet das Verfahren in einem sich dann an den zweiten Verfahrensschritt II anschließenden fünften Verfahrensschritt V.

In diesem Fall gilt es keine gesonderten Maßnahmen zu treffen. Der Sicherheitsabstand E wird eingehalten, es besteht keine akute Gefahrensituation.

Alternativ kann das Verfahren in demjenigen Fall, dass wenn das Ergebnis des im zweiten Verfahrensschritt II stattfindenden Vergleichs ist, dass der erfasste Abstand F größer ist, als der dem mindestens einzuhaltenden Sicherheitsabstand E proportionale Abstandsschwellenwert, wie durch einen in Fig. 3 gestrichelt dargestellten Pfeil P angedeutet zumindest so lange mit dem ersten Verfahrensschritt I erneut von vorn beginnen, so lange das eigene Fahrzeug A in Betrieb ist und damit aktiv am Verkehrsgeschehen teilnimmt.

In diesem Fall kann im fünften Verfahrensschritt V beispielsweise eine Abfrage erfolgen, ob das eigene Fahrzeug A sich in Betrieb befindet, oder nicht. Dies kann beispielsweise durch Abfrage einer Stellung eines Zündschlüssels und/oder durch Abfrage einer Betätigung einer Start-Stopp-Taste festgestellt werden.

Das Verfahren kann zusätzlich vorsehen, dass der Mindestabstand abhängig von den herrschenden physikalischen Randbedingungen und/oder von einem momentanen Fahrzustand des eigenen Fahrzeugs A und/oder von einem momentanen Fahrzustand des fremden Fahrzeugs B und/oder vom physiologisch bedingten Reaktionsvermögen eines durchschnittlichen Fahrers eines Fahrzeugs A, B ist.

Zumindest die herrschenden physikalischen Randbedingungen und/oder die momentanen Fahrzustände des eigenen Fahrzeugs A und/oder des fremden Fahrzeugs B können hierzu eigens zumindest teilweise erfasst und/oder beispielsweise von einem Bordnetzwerk des eigenen Fahrzeugs A zumindest teilweise erlangt werden.

Das Verfahren kann hiernach vorsehen, den Abstandsschwellenwert in Abhängigkeit von Umgebungsbedingungen zu verändern und hierdurch anzupassen.

Denkbare Umgebungsbedingungen können beispielsweise Witterungsbedingungen umfassen, wie etwa - ohne Anspruch auf Vollständigkeit der nachfolgenden Auflistung - Außentemperatur, Sichtweite, Nässe, Glätte, Gefälle, Steigung sowie Kombinationen hiervon.

Alternativ oder zusätzlich können denkbare Umgebungsbedingungen beispielsweise Verkehrsbedingungen umfassen, wie etwa - ohne Anspruch auf Vollständigkeit der nachfolgenden Auflistung - Fahrgeschwindigkeit V_{A} des eigenen Fahrzeugs A, Relativgeschwindigkeit des fremden Fahrzeugs B zum eigenen Fahrzeug A, Geschwindigkeitsänderung des eigenen Fahrzeugs A, Geschwindigkeitsänderung des fremden Fahrzeugs B, Abstand zu einem vorausfahrenden, weiteren fremden Fahrzeug, Kolonnenfahrt, Stau, Verkehrszeichen (dynamische Geschwindigkeitsbeschränkungen, Ampeln), sowie Kombinationen hiervon.

Der Abstandsschwellenwert kann hierbei durch einen veränderlichen Proportionalitätsfaktor, der mit einem sich zumindest anhand physikalischer Randbedingungen ergebenden Mindestabstand multipliziert wird, kontinuierlich oder in diskreten Schritten, beispielsweise anhand von in einem beispielsweise durch die erwähnte mindestens eine gegebenenfalls vorgesehene Speichereinrichtung der Mittel zum Vergleich gebildeten Datenspeicher abgelegten Tabellenwerten angepasst beziehungsweise verändert werden.

Denkbar ist beispielsweise, dass für unterschiedliche Witterungsbedingungen verschiedene Proportionalitätsfaktoren hinterlegt sind, die beispielsweise in Abhängigkeit von einer Temperatur- und/oder Niederschlags- und/oder Sichtweitenmessung ausgewählt werden können. Alternativ können verschiedene Mindestabstände und/oder verschiedene Abstandsschwellenwerte beispielsweise in Abhängigkeit von einer Temperatur- und/oder Niederschlags- und/oder Sichtweitenmessung ausgewählt werden.

Alternativ kann der Abstandsschwellenwert selbst aus einer Reihe von beispielsweise in einem beispielsweise durch die erwähnte mindestens eine gegebenenfalls vorgesehene Speichereinrichtung der Mittel zum Vergleich gebildeten Datenspeicher abgelegten Tabellenwerten anhand von Umgebungsbedingungen ausgewählt werden.

Genauso kann in Bezug auf unterschiedliche Fahrgeschwindigkeiten des eigenen Fahrzeugs A und/oder des fremden Fahrzeugs B verfahren werden.

Typischerweise werden Fahrgeschwindigkeiten des eigenen Fahrzeugs A und des fremden Fahrzeugs B direkt oder indirekt berücksichtigt, wenn beispielsweise die Relativgeschwindigkeit zwischen dem eigenen Fahrzeug A und dem fremden Fahrzeug B in die Auswahl des Proportionalitätsfaktors und/oder des Abstandsschwellenwerts einfließt oder mit einfließt.

Hintergrund ist ,dass der dem Sicherheitsabstand E und dem Abstandsschwellenwert proportionale, erforderliche Mindestabstand von vielen Faktoren abhängen kann. Fahrgeschwindigkeit V_{A}, Bremswirkung des eigenen Fahrzeugs A und/oder des fremden Fahrzeugs B, technische Ausstattung, Fahrbahn, Temperatur, Witterung, Bereifung, etc.. All diese Faktoren könnten in der Abstandsbewertung mit einfließen. Ebenso wie der Umstand, dass der Mindestabstand von einer Vollbremsung ausgeht. Beispielsweise kann die Erfassung und zumindest zeitweilige Speicherung von einem oder mehreren fotografischen Bildern zumindest desjenigen Teils der Umgebung und/oder des Umfelds des eigenen Fahrzeugs A, in welchem Teil der Umgebung und/oder des Umfelds des eigenen Fahrzeugs A sich das fremde Fahrzeug B befindet, dessen gemessener Abstand zum eigenen Fahrzeug A den einem Mindestabstand proportionalen Abstandsschwellenwert unterschreitet, auch erst bei einer deutlicheren Unterschreitung, wie z.B. < 70% des erforderlichen Mindestabstandes vorgenommen werden.

Die Erfassung von Bildern kann andauernd, beispielsweise permanent und/oder wie bei einer Videoaufnahme üblich in zeitlich eng getakteter Folge stattfinden, wobei nur die zumindest zeitweilige Speicherung der erfassten Bilder bei Unterschreitung des einem Mindestabstand proportionalen Abstandsschwellenwerts vorgenommen wird.

Das Verfahren kann vorsehen, dass eine bis dato nur zeitweilige Speicherung erfasster Bilder im Falle einer Kollision oder eines Unfalls in eine dauerhafte Speicherung umgewandelt wird. Hierzu kann eine auf das eigene Fahrzeug A einwirkende Beschleunigung erfasst und diese mit einem beispielsweise richtungsabhängigen Beschleunigungsschwellenwert verglichen werden (Fig. 3).

Ist das Ergebnis des Vergleichs eine Überschreitung des beispielsweise richtungsabhängigen Beschleunigungsschwellenwerts, kann eine dauerhafte Speicherung der bis dato temporär, i.e. zeitweilig gespeicherten Bilder zumindest desjenigen Teils der Umgebung und/oder des Umfelds des eigenen Fahrzeugs A erfolgen, in welchem Teil der Umgebung und/oder des Umfelds des eigenen Fahrzeugs A sich das fremde Fahrzeug B, dessen gemessener Abstand zum eigenen Fahrzeug A den einem Mindestabstand proportionalen Abstandsschwellenwert unterschreitet oder unterschritten hat, befindet oder befand (Fig. 3).

Die Erfassung der Beschleunigung kann beispielsweise durch Abfrage von am eigenen Fahrzeug A beispielsweise zur Auslöseentscheidung von Insassenschutzvorrichtungen ohnehin verbauten Kollisionssensoren, oder durch Bezug von zur Auslöseentscheidung von Insassenschutzvorrichtungen verwendeten und/oder aufbereiteten Signalen erfolgen.

Beispielsweise kann hierbei der Beschleunigungsschwellenwert derart festgelegt sein, dass dieser einer Kollisionsstärke entspricht, ab welcher das eigene Fahrzeug A bleibenden Schaden nimmt. In diesem Zusammenhang kann der Beschleunigungsschwellenwert richtungsabhängig sein. Hintergrund ist, dass Fahrzeuge vorder- und rückseitig durch in einem niedrigen Kollisionsstärkebereich vor allem in und entgegen der Fahrtrichtung reversibel verformbare Stoßfänger besser geschützt sind und damit höhere Kollisionsstärken unbeschadet überstehen, als beispielsweise an den Seiten und/oder schräg und/oder quer zur Fahrtrichtung.

In Verbindung mit einer derartigen Ausgestaltung des Verfahrens ist ersichtlich, dass die temporäre Speicherung von Bildern zumindest desjenigen Teils der Umgebung und/oder des Umfelds des eigenen Fahrzeugs A, in welchem Teil der Umgebung und/oder des Umfelds des eigenen Fahrzeugs A sich das fremde Fahrzeug B befindet, dessen gemessener Abstand zum eigenen Fahrzeug A den einem Mindestabstand proportionalen Abstandsschwellenwert unterschreitet, wenigstens einen Zeitraum umfasst, welcher zumindest von wenigen Sekunden vor einer Kollision, bis zur Auslöseentscheidung von Insassenschutzvorrichtungen reicht.

Beispielsweise kann das Verfahren eine Erfassung eines beispielsweise durch Abfrage eines Beschleunigungssensors erhaltenen Beschleunigungswerts vorsehen, welcher einer vom eigenen Fahrzeug A momentan erfahrenen Beschleunigung proportional ist.

Die Erfassung eines Beschleunigungswerts kann alternativ oder zusätzlich zu der bereits angedeuteten Abfrage eines beispielsweise in eine Fahrzeugleuchte integrierten Beschleunigungssensors eine Erlangung eines entsprechenden Beschleunigungswerts aus einem Bordnetzwerk des eigenen Fahrzeugs A umfassen.

Geeignet ist beispielsweise in diesem Zusammenhang ein Signal oder ein Wert eines oder mehrerer Kollisionssensoren und/oder ein Auslösesignal oder ein Auslösewert einer Insassenschutzeinrichtung des eigenen Fahrzeugs A, insbesondere eines oder mehrerer Airbags.

In letzterem Fall, wenn also bereits ein Auslösesignal oder -wert vorliegt, kann auf einen Vergleich mit einem Beschleunigungsschwellenwert verzichtet werden und bei Vorliegen des Auslösesignals oder -werts die Permanentspeicherung des bis dato erfassten Verkehrsgeschehens im Umfeld des eigenen Fahrzeugs A zur Beweiserfassung vorgenommen werden.

Alternativ oder zusätzlich kann das Verfahren eine permanente Speicherung der bis dato erfassten Bilder bei Trennung von einer Stromversorgung vorsehen.

Dies kann beispielsweise bei jedem Abstellen des eigenen Fahrzeugs A erfolgen, insbesondere jedoch, wenn beispielsweise durch zu dichtes Auffahren verursacht die Stromversorgung unfallbedingt getrennt wird.

Sind beispielsweise alle zur Durchführung des Verfahrens erforderlichen Komponenten in einer Fahrzeugleuchte 01 untergebracht und wird diese aufgrund eines Unfalls vom Rest des eigenen Fahrzeugs A getrennt, so stellt eine permanente Speicherung der bis dato erfassten Bilder bei Trennung von der Stromversorgung ähnlich einem umgangssprachlich auch als Black Box bezeichneten Flugdatenschreiber eine Rekonstruktionsmöglichkeit des Unfallhergangs sicher.

Vorteilhaft wird der jeweils gemessene Abstand in das beispielsweise von der Kamera erfasste Bild eingeblendet und gemeinsam mit dem Bild zumindest zeitweilig gespeichert.

Zusätzlich zu einer Speicherung der erfassten Bilder kann eine Speicherung der gewonnenen Abstands- und/oder Geschwindigkeits- und/oder Mindestabstandsdaten erfolgen.

Demnach kann eine Speicherung der gewonnenen Abstands-, Geschwindigkeits-, Mindestabstands- und Bilddaten erfolgen.

Damit der Speicherbedarf überschaubar bleibt, kann die Speicherung ein in einem vorgebbaren Überschreibzyklus stattfindendes zyklisches Überschreiben der bis dato gespeicherten Bilder vorsehen. Hiernach wird die Speicherung in einem vorgebbaren Überschreibzyklus zyklisch überschrieben.

Ein zur Speicherung von beispielsweise von einer Kamera erfasster Bilder vorgesehener Speicher kann beispielsweise zyklisch überschrieben werden, solange keine Kollision erfasst worden ist. Beispielsweise ist ein Überschreibzyklus des Speichers alle 60 s denkbar. Demnach werden aller erfassten und im Speicher abgelegten Bilder, die älter als 60 s sind, mit einem neuen Bild überschrieben.

Ein erfindungsgemäßes Verfahren sieht demnach vor, vom insbesondere vorausfahrenden, eigenen Fahrzeug A aus einen Abstand F zum insbesondere nachfolgenden, fremden Fahrzeug B zu erfassen. Anschließend sieht das Verfahren vor, den erfassten Abstand F mit einem einem mindestens einzuhaltenden Sicherheitsabstand E proportionalen, beispielsweise entsprechenden Abstandsschwellenwert zu vergleichen. Ist das Ergebnis des Vergleichs, dass der erfasste Abstand F größer ist, als der dem mindestens einzuhaltenden Sicherheitsabstand E proportionale Abstandsschwellenwert, so kann das Verfahren zumindest so lange erneut von vorn beginnen, wie das eigene Fahrzeug A in Betrieb ist. Ist das Ergebnis des Vergleichs hingegen, dass der erfasste Abstand F kleiner ist, als der dem mindestens einzuhaltenden Sicherheitsabstand E proportionale Abstandsschwellenwert, so sieht das Verfahren dann eine Erfassung und zumindest zeitweilige Speicherung von einem oder mehreren fotografischen Bildern zumindest desjenigen Teils der Umgebung und/oder des Umfelds des eigenen Fahrzeugs A vor, in welchem Teil der Umgebung und/oder des Umfelds des eigenen Fahrzeugs A sich das fremde Fahrzeug B, dessen gemessener Abstand F zum eigenen Fahrzeug A den einem Mindestabstand und dem Sicherheitsabstand E proportionalen Abstandsschwellenwert unterschreitet, befindet.

Vereinfacht ausgedrückt vergleicht das eigene Fahrzeug A den tatsächlichen, realen Abstand F zu dem nachfolgenden, fremden Fahrzeug B mit einem beispielsweise auf Grund von Parametern wie Fahrgeschwindigkeit V_{A}, eigene Bremsleistung, durchschnittlicher Reaktionsweg, Fahrbahnverhältnisse, etc. ermittelten Mindestabstand, der beispielsweise auch die Fahrgeschwindigkeit und Geschwindigkeitsänderung des nachkommenden fremden Fahrzeugs B berücksichtigen kann.

Wird nun der Abstand kleiner als der dem Mindestabstand proportionale Sicherheitsabstand E erfolgt die Erfassung und zumindest zeitweilige Speicherung von einem oder mehreren fotografischen Bildern zumindest desjenigen Teils der Umgebung und/oder des Umfelds des eigenen Fahrzeugs A, in welchem Teil der Umgebung und/oder des Umfelds des eigenen Fahrzeugs A sich das fremde Fahrzeug B, dessen gemessener Abstand F zum eigenen Fahrzeug A den dem Sicherheitsabstand E und dem Mindestabstand proportionalen Abstandsschwellenwert unterschreitet, befindet.

Ein voranstehend beschriebenes Verfahren kann durch eine nachfolgend beschriebene, zur Ausführung eines voranstehend beschriebenen Verfahrens geeignete und in Fig. 1, Fig. 2, Fig. 3 ganz oder in Teilen dargestellte Fahrzeugleuchte 01 verwirklicht sein.

Die Fahrzeugleuchte 01 umfasst ein Leuchtengehäuse und wenigstens eine Lichtscheibe, welche zumindest teilweise einen Leuchteninnenraum umgeben. Mit anderen Worten umfasst die Fahrzeugleuchte 01 einen von einem Leuchtengehäuse und wenigstens einer Lichtscheibe zumindest teilweise umgebenen Leuchteninnenraum.

Die Fahrzeugleuchte 01 umfasst mindestens ein in dem Leuchteninnenraum wenigstens zum Teil beherbergtes Leuchtmittel mit mindestens einer Lichtquelle zur Erfüllung zumindest einer Lichtfunktion.

Ferner umfasst die Fahrzeugleuchte 01 mindestens eine in zumindest einen Teil des Leuchteninnenraums wenigstens teilweise beherbergte Kamera. Die Kamera ist auf eine dem Leuchtengehäuse abgewandte Umgebung gerichtet.

Vorzugsweise blickt die Kamera durch eine Partie der Lichtscheibe oder durch eine der Lichtscheibe benachbarte Partie aus dem Leuchteninnenraum heraus in die Umgebung.

Außerdem umfasst die Fahrzeugleuchte 01 mit der Kamera verbundene Speichermittel zur Speicherung von von der Kamera erfasster Bilder der Umgebung.

Darüber hinaus umfasst die Fahrzeugleuchte 01 Mittel zur Abstandsmessung zu einem fremden Fahrzeug B in denjenigem Teil der Umgebung und/oder des Umfelds eines mit der Fahrzeugleuchte 01 ausgestatteten eigenen Fahrzeugs A, in welchen die Kamera blickt.

Die Mittel zur Abstandsmessung sind demnach zur Erfassung eines Abstands zu einem fremden Fahrzeug B in der von der mindestens einen in dem Leuchteninnenraum beherbergten Kamera einsehbaren Umgebung der Fahrzeugleuchte 01 vorgesehen.

Die Mittel zur Abstandsmessung erzeugen ein Ausgangssignal, welches einem Abstand F eines mit der Fahrzeugleuchte 01 ausgestatteten eigenen Fahrzeugs A zu einem diesem beispielsweise nachfolgenden, fremden Fahrzeug B proportional ist, oder dem sonst wie der Abstand F zu entnehmen ist.

Ferner umfasst die Fahrzeugleuchte 01 mit den Mitteln zur Abstandsmessung verbundene Mittel zum Vergleich des gemessenen Abstands mit einem einem Sicherheitsabstand E proportionalen Abstandsschwellenwert.

Liegt das Ergebnis der Abstandsmessung nicht in einem Längen- oder Abstandsmaß vor, so vergleichen die Mittel zum Vergleich das Ausgangssignal der Mittel zur Abstandsmessung mit einem dem Abstandsschwellenwert entsprechenden Schwellenwert für das Ausgangssignal. Das Ausgangssignal und der Schwellenwert können beide analog oder digital vorliegen, oder gemischt.

Die Mittel zum Vergleich sind mit der Kamera und/oder den Speichermitteln derart verbunden, dass sie eine Aufnahme von Bildern der Umgebung durch die Kamera und/oder eine Speicherung der von der Kamera erfassten Bildern der Umgebung auslösen, wenn das Ergebnis des Vergleichs ist, dass der gemessene Abstand F kleiner ist, als der Abstandsschwellenwert.

Zusammengefasst umfasst eine Fahrzeugleuchte 01 zur Verwirklichung eines Verfahrens zur Beweiserfassung bei Unterschreitung eines Sicherheitsabstands zwischen aufeinander folgenden Fahrzeugen, einem eigenen Fahrzeug und wenigstens einem fremden Fahrzeug in dessen Umgebung und/oder Umfeld:
- ein Leuchtengehäuse und wenigstens eine Lichtscheibe, welche zumindest teilweise einen Leuchteninnenraum umgeben,
- mindestens ein in dem Leuchteninnenraum wenigstens zum Teil beherbergtes Leuchtmittel mit mindestens einer Lichtquelle zur Erfüllung zumindest einer Lichtfunktion der Fahrzeugleuchte 01,
- mindestens eine auf eine dem Leuchtengehäuse abgewandte Umgebung gerichtete und in zumindest einem Teil des Leuchteninnenraums wenigstens teilweise beherbergte Kamera,
- mit der Kamera verbundene Speichermittel zur Speicherung zumindest von von der Kamera erfasster Bilder der Umgebung,
- Mittel zur Erfassung eines Abstands F zu einem fremden Fahrzeug B in der von der mindestens einen in dem Leuchteninnenraum beherbergten Kamera einsehbaren Umgebung der Fahrzeugleuchte 01, sowie
- mit den Mitteln zur Abstandsmessung verbundene Mittel zum Vergleich des gemessenen Abstands mit einem einem Sicherheitsabstand E proportionalen Abstandsschwellenwert,
wobei die Mittel zum Vergleich mit der Kamera und/oder den Speichermitteln derart verbunden sind, dass sie eine Aufnahme von Bildern der Umgebung durch die Kamera und/oder eine Speicherung der von der Kamera erfassten Bilder der Umgebung auslösen, wenn das Ergebnis des Vergleichs ist, dass der gemessene Abstand F kleiner ist, als der dem Sicherheitsabstand E proportionale Abstandsschwellenwert.

Die Kamera der Fahrzeugleuchte 01 kann durch eine Partie der Lichtscheibe oder durch eine der Lichtscheibe benachbarte Partie aus dem Leuchteninnenraum heraus in die Umgebung blicken.

Die Abstandsmessung sowie Bilderfassung und -speicherung kann demnach in eine Fahrzeugleuchte 01 des eigenen Fahrzeugs A integriert sein. Zur Messung des Abstands F zu einem fremden Fahrzeug B eingesetzte Mittel können einen oder mehrere Abstandssensoren sowie mindestens eine hiermit sowie mit einer zur Erfassung von einem oder mehreren fotografischen Bildern zumindest desjenigen Teils der Umgebung und/oder des Umfelds des eigenen Fahrzeugs A, in welchem Teil der Umgebung und/oder des Umfelds des eigenen Fahrzeugs A sich das fremde Fahrzeug B befindet, dessen gemessener Abstand F zum eigenen Fahrzeug A den einem Mindestabstand und/oder einem Sicherheitsabstand E proportionalen Abstandsschwellenwert unterschreitet, vorgesehene Kamera verbundenen Auswerte- und Steuereinheit umfassen.

Eine zumindest zeitweilige Speicherung der fotografischen Bilder kann in der Kamera selbst erfolgen und/oder in einer mit der Auswerte- und Steuereinheit sowie der Kamera verbundenen und/oder in der Auswerte- und Steuereinheit integrierten Speichereinheit.

Demnach können die Speichermittel mindestens eine in die Kamera und/oder in die Mittel zum Vergleich integrierte und/oder mit den Mitteln zum Vergleich und der Kamera verbundene Speichereinheit umfassen.

Die Mittel zum Vergleich können als eine Auswerte- und Steuereinheit ausgeführt sein.

Die Fahrzeugleuchte 01 kann darüber hinaus Datenspeichermittel zur Speicherung zumindest eines Abstandsschwellenwerts und/oder eines Proportionalitätsfaktors umfassen.

Die Fahrzeugleuchte 01 kann Mittel zur Erfassung und/oder Erlangung von Umgebungsbedingungen sowie Mittel zur Veränderung des Abstandsschwellenwerts in Abhängigkeit von den Umgebungsbedingungen umfassen.

Zur Erfassung von Umgebungsbedingungen können beispielsweise Sensoren in oder an der Fahrzeugleuchte 01 vorgesehen sein ,welche Temperatur und/oder Sichtweite und/oder Niederschlagsmenge zu erfassen in der Lage sind.

Zur Erlangung von Umgebungsbedingungen hingegen kann die Fahrzeugleuchte hingegen über eine Schnittstelle zu einem entsprechende Informationen über Umgebungsbedingungen fahrzeugseitig vorhaltenden Bordnetzwerk verfügen.

Wichtig ist in diesem Zusammenhang hervorzuheben, dass alternativ oder zusätzlich momentane Fahrzustände zumindest eines oder mehrerer fremder Fahrzeuge B in der Umgebung des eigenen Fahrzeugs A zumindest einen oder mehrere Teile von Umgebungsbedingungen bilden können, welche in eine Veränderung des Abstandsschwellenwerts mit einfließen können. Auch Fahrzustände des eigenen Fahrzeugs A können in eine Veränderung des Abstandsschwellenwerts mit einfließen. Ohne Anspruch auf Vollständigkeit können dies momentane Fahrgeschwindigkeit V_{A}, momentane Bremsverzögerung, momentane Beschleunigung, momentaner Abstand zum Vordermann des eigenen Fahrzeugs A, momentane Fahrgeschwindigkeit momentane Bremsverzögerung, momentane Beschleunigung, momentaner Abstand eines fremden Fahrzeugs B zum Vordermann und/oder zum Nachfolgenden sowie Kombinationen hiervon sein.

Die Fahrzeugleuchte 01 kann einen Speicher zum zumindest kurzzeitigen Betrieb wenigstens der Kamera und/oder der Speichermittel der Fahrzeugleuchte benötigter elektrischer Energie umfassen.

Ein solcher Speicher elektrischer Energie kann beispielsweise kapazitiver Natur sein. Er kann beispielsweise während einer im normalen Gebrauch des eigenen Fahrzeugs A stattfindenden regulären Aktivierung einer durch die Lichtquelle eines Leuchtmittels verwirklichten Lichtfunktion aufgeladen werden.

Die Fahrzeugleuchte 01 kann Mittel zur Erfassung und/oder Erlangung einer momentan auf das mit ihr verbundene eigene Fahrzeug A und/oder sie selbst einwirkenden Beschleunigung umfassen.

Beispielsweise kann die Fahrzeugleuchte 01 einen Beschleunigungssensor aufweisen, welcher ein einer vom eigenen Fahrzeug momentan erfahrenen Beschleunigung proportionales Beschleunigungssignal ausgibt.

Die Erfassung und/oder Erlangung einer momentan auf das mit der Fahrzeugleuchte 01 verbundene eigene Fahrzeug A und/oder die Fahrzeugleuchte 01 selbst einwirkenden Beschleunigung kann alternativ oder zusätzlich zu der bereits angedeuteten Abfrage eines in die Fahrzeugleuchte 01 integrierten Beschleunigungssensors eine Erlangung eines entsprechenden Beschleunigungswerts aus einem Bordnetzwerk des eigenen Fahrzeugs A umfassen. Entsprechend kann die Fahrzeugleuchte 01 mit einer Schnittstelle zu einem entsprechende Informationen fahrzeugseitig vorhaltenden Bordnetzwerk eines mit ihr verbundenen eigenen Fahrzeugs A versehen sein.

Geeignet ist beispielsweise in diesem Zusammenhang ein Signal oder ein Wert eines oder mehrerer Kollisionssensoren und/oder ein Auslösesignal oder ein Auslösewert einer Insassenschutzeinrichtung des eigenen Fahrzeugs, insbesondere eines oder mehrerer Airbags.

In letzterem Fall, wenn also bereits ein Auslösesignal oder -wert vorliegt, kann auf einen Vergleich mit einem Beschleunigungsschwellenwert verzichtet werden und bei Vorliegen des Auslösesignals oder -werts eine Permanentspeicherung des bis dato erfassten Verkehrsgeschehens im Umfeld des eigenen Fahrzeugs zur Beweiserfassung vorgenommen werden.

Ist die Beschleunigung höher, als eine bei einer zur dauerhaften Schädigung des eigenen Fahrzeugs A und/oder der Fahrzeugleuchte 01 erforderlichen Kollisionsstärke auftretende Beschleunigung, so können die Mittel zur Erfassung einer momentan auf das mit ihr verbundene eigene Fahrzeug A und/oder sie selbst einwirkenden Beschleunigung eine dauerhafte Speicherung der bis dato in einem vorangehenden, vorgegebenen Zeitraum von beispielsweise 5 s, ..., 60 s erfassten Bilder veranlassen.

Besonders bevorzugt ist die Fahrzeugleuchte 01 mit integrierter Kamera und mit integriertem Abstandssensor sowie Auswertungs- und Speichermitteln als Heckleuchte ausgebildet (Fig. 1, Fig. 2, Fig. 3).

Das Verfahren und die Fahrzeugleuchte 01 können außerdem eine Linsenreinigung der Kamera vorsehen.

Beispielsweise kann es sich bei der Fahrzeugleuchte 01 um eine hoch gesetzte dritte Bremsleuchte, ein so genanntes Central, High-Mounted Braking Light, handeln. Dies hat den zusätzlichen Vorteil, dass der Heckscheibenwischer die Kamera-Linse mit sauber hält.

Ebenso ist denkbar, eine solche Kamera in eine als Frontscheinwerfer ausgebildete Fahrzeugleuchte 01 zu integrieren, gegebenenfalls gekoppelt mit einer Sensorik, die Vollbremsungen erkennt.

Die Erfindung ermöglicht auch eine Nachrüstung bestehender eigener Fahrzeuge A und erhöht die Verkehrssicherheit ohne notwendige technische Einrichtungen der anderen Verkehrsteilnehmer.

Mit der Erfindung wird eine Erhöhung der Verkehrssicherheit sowie eine Beweisaufnahme in der Folge eines Auffahrunfalls durch Integration von:
- Abstandserfassung,
- Mindestabstandsermittlung anhand der Fahrgeschwindigkeit V_{A} des eigenen Fahrzeugs A,
- Bilderfassung, sowie
- Speicherung der gewonnenen Abstands-, Geschwindigkeits-, Mindestabstands- und Bilddaten
in eine beispielsweise als eine Heckleuchte für ein Kraftfahrzeug ausgeführte Fahrzeugleuchte 01 geschaffen.

Technische Vorteile ergeben sich durch eine Verbesserung der Erfassung verkehrsgefährdender Situationen einhergehend mit einer Steigerung der Verkehrssicherheit.

Zusätzliche Vorteile gegenüber dem Stand der Technik sind die Möglichkeit eines Verzichts auf Infrastruktur am insbesondere nachfolgenden, fremden Fahrzeug B. Damit einher geht der Vorteil, dass die Beweiserfassung sowie die zum Beweis erfassten Bilder und/oder Videos sich im Machtbereich des insbesondere vorausfahrenden, eigenen Fahrzeugs A befinden, welches durch Unterschreitung des Sicherheitsabstands durch das nachfolgende, fremde Fahrzeug B zunächst wenigstens genötigt oder gar geschädigt ist.

Wichtig ist hervorzuheben, dass die Erfindung darüber hinaus durch eine in eine Fahrzeugleuchte 01 und/oder in ein eigenes Fahrzeug A integrierbare, beispielsweise als eine Sicherheitskamera ausgeführte Vorrichtung verwirklicht sein kann, welche alles Notwendige für eine Abstandserkennung, Mindestabstandsermittlung und Bild-Erfassung mit Speicherung beinhaltet. Dadurch entsteht eine automatische Situations-Erfassung wie etwa bei einer Radarfalle.

Bei Unfällen oder massiven Unterschreitungen des Mindestabstandes würde die Vorrichtung das vorzeitig erkennen und den Vorgang filmisch oder fotografisch festhalten. Diese Dokumentation kann bei einem Unfall zur Aufklärung dienen und/oder vor Gericht als Beweismittel zugelassen werden. Denkbar ist auch, dem Fahrer des eigenen Fahrzeugs A die Möglichkeit zu schaffen, auf das filmisch festgehaltene Ergebnis der Kamera gestützte Beweismittel zu erlangen, um eine Anzeige zu erstatten.

Die Vorrichtung kann beispielsweise aus der Fahrgeschwindigkeit des eigenen Fahrzeugs den Mindestabstand bestimmen, welcher mit dem tatsächlichen Abstand F zum nachkommenden, fremden Fahrzeug B verglichen wird. Bei einer gefährlichen Bewertung werden Bilder geschossen, ähnlich wie bei einer Radarfalle, oder ein Film ausgelöst.

Die Fahrzeugleuchte 01 kann einzelne oder eine Kombination der zuvor in Verbindung mit der Erfindung und/oder dem Verfahren beschriebene Merkmale aufweisen, ebenso wie das Verfahren einzelne oder eine Kombination mehrerer zuvor in Verbindung mit der Erfindung und/oder der Fahrzeugleuchte 01 beschriebene Merkmale aufweisen und/oder verwirklichen kann.

Die Fahrzeugleuchte 01 und/oder das Verfahren können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der voranstehenden Beschreibung zu den in den Zeichnungen dargestellten Ausführungsbeispielen beschriebene und/oder in den nachfolgenden Ansprüchen genannte Merkmale aufweisen.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Fahrzeugleuchte

- A: eigenes Fahrzeug
- B: fremdes Fahrzeug
- E: Sicherheitsabstand
- F: Abstand (des fremden Fahrzeugs B zum eigenen Fahrzeug A)

- V_{A}: Fahrgeschwindigkeit (des eigenen Fahrzeugs A)

- I: Verfahrensschritt
- II: Verfahrensschritt
- III: Verfahrensschritt
- IV: Verfahrensschritt
- V: Verfahrensschritt

- P: Pfeil
- Q: Pfeil

## Patentansprüche

1. Verfahren zur Beweiserfassung bei Unterschreitung eines Sicherheitsabstands zwischen aufeinander folgenden Fahrzeugen (A, B), einem eigenen Fahrzeug (A) und wenigstens einem fremden Fahrzeug (B) in dessen Umgebung und/oder Umfeld, umfassend eine Messung eines Abstands (F) vom eigenen Fahrzeug (A) aus zu einem fremden Fahrzeug (B), wobei bei einer durch einen Vergleich des gemessenen Abstands (F) mit einem Abstandsschwellenwert festgestellten Unterschreitung eines vorgegebenen Mindestabstands und/oder eines dem Mindestabstand proportionalen Sicherheitsabstands (E) eine Erfassung und zumindest zeitweilige Speicherung von einem oder mehreren Bildern zumindest desjenigen Teils der Umgebung und/oder des Umfelds des eigenen Fahrzeugs (A) aktiviert wird, in welchem Teil der Umgebung und/oder des Umfelds des eigenen Fahrzeugs (A) sich das fremde Fahrzeug (B), dessen gemessener Abstand (F) zum eigenen Fahrzeug (A) den Abstandsschwellenwert (E) unterschreitet, befindet.

2. Verfahren nach Anspruch 1, wobei der Mindestabstand abhängig von hierzu erfassten und/oder erlangten:
- herrschenden physikalischen Randbedingungen und/oder
- momentanen Fahrzuständen des eigenen Fahrzeugs (A) und/oder
- momentanen Fahrzuständen des fremden Fahrzeugs (B) und/oder
vom physiologisch bedingten Reaktionsvermögen eines durchschnittlichen Fahrers eines Fahrzeugs (A, B) ist.

3. Verfahren nach Anspruch 1 oder 2, wobei die Erfassung von Bildern andauernd stattfindet und die zumindest zeitweilige Speicherung der erfassten Bilder bei Unterschreitung des Abstandsschwellenwerts (E) vorgenommen wird.

4. Verfahren nach Anspruch 1, 2 oder 3, wobei eine auf das eigene Fahrzeug (A) einwirkende Beschleunigung erfasst, und diese mit einem Beschleunigungsschwellenwert verglichen wird, wobei wenn das Ergebnis des Vergleichs eine Überschreitung des Beschleunigungsschwellenwerts ist, eine dauerhafte Speicherung der bis dato zeitweilig gespeicherten Bilder erfolgt.

5. Verfahren nach einem der Ansprüche 1 bis 4, wobei eine permanente Speicherung der bis dato erfassten Bilder bei Trennung von einer Stromversorgung erfolgt.

6. Verfahren nach einem der voranstehenden Ansprüche, wobei der jeweils gemessene Abstand (F) in das erfasste Bild eingeblendet wird.

7. Verfahren nach einem der voranstehenden Ansprüche, wobei zusätzlich zu einer Speicherung der erfassten Bilder eine Speicherung der gewonnenen Abstands- und/oder Geschwindigkeits- und/oder Mindestabstandsdaten erfolgt.

8. Verfahren nach einem der voranstehenden Ansprüche, wobei die Speicherung zyklisch überschrieben wird.

9. Fahrzeugleuchte (01) zur Beweiserfassung bei Unterschreitung eines Sicherheitsabstands zwischen aufeinander folgenden Fahrzeugen (A, B), einem eigenen Fahrzeug (A) und wenigstens einem fremden Fahrzeug (B) in dessen Umgebung und/oder Umfeld, umfassend ein Leuchtengehäuse und wenigstens eine Lichtscheibe, welche zumindest teilweise einen Leuchteninnenraum umgeben, mindestens ein in dem Leuchteninnenraum wenigstens zum Teil beherbergtes Leuchtmittel mit mindestens einer Lichtquelle zur Erfüllung zumindest einer Lichtfunktion, mindestens eine auf eine dem Leuchtengehäuse abgewandte Umgebung gerichtete und in zumindest einem Teil des Leuchteninnenraums wenigstens teilweise beherbergte Kamera, mit der Kamera verbundene Speichermittel zur Speicherung zumindest von von der Kamera erfasster Bilder der Umgebung, Mittel zur Erfassung eines Abstands zu einem fremden Fahrzeug (B) in der von der Kamera einsehbaren Umgebung der Fahrzeugleuchte (01), sowie mit den Mitteln zur Abstandsmessung verbundene Mittel zum Vergleich des gemessenen Abstands mit einem Abstandsschwellenwert (E), wobei die Mittel zum Vergleich mit der Kamera und/oder den Speichermitteln derart verbunden sind, dass sie eine Aufnahme von Bildern der Umgebung durch die Kamera und/oder eine Speicherung der von der Kamera erfassten Bilder der Umgebung auslösen, wenn das Ergebnis des Vergleichs ist, dass der gemessene Abstand (F) kleiner ist, als der Abstandsschwellenwert (E).

10. Fahrzeugleuchte nach Anspruch 9, wobei die Kamera durch eine Partie der Lichtscheibe oder durch eine der Lichtscheibe benachbarte Partie aus dem Leuchteninnenraum heraus in die Umgebung blickt.

11. Fahrzeugleuchte nach Anspruch 9 oder 10, wobei sie Mittel zur Erfassung und/oder Erlangung von Umgebungsbedingungen sowie Mittel zur Veränderung des Abstandsschwellenwerts (E) in Abhängigkeit von den Umgebungsbedingungen umfasst.

12. Fahrzeugleuchte nach Anspruch 9, 10 oder 11, wobei sie einen Speicher zum zumindest kurzzeitigen Betrieb wenigstens der Kamera und/oder der Speichermittel der Fahrzeugleuchte (01) benötigter elektrischer Energie umfasst.

13. Fahrzeugleuchte nach einem der Ansprüche 9 bis 12, wobei sie Mittel zur Erfassung und/oder Erlangung einer momentan auf das mit ihr verbundene Fahrzeug (A) und/oder sie selbst einwirkenden Beschleunigung umfasst.

14. Fahrzeugleuchte nach einem der Ansprüche 9 bis 13, wobei sie als Heckleuchte ausgebildet ist.

## Geänderte Patentansprüche

### Geänderte Patentansprüche gemäss Regel 137(2) EPÜ.

1. Verfahren zur Beweiserfassung bei Unterschreitung eines Sicherheitsabstands zwischen aufeinander folgenden Fahrzeugen (A, B), einem eigenen Fahrzeug (A) und wenigstens einem fremden Fahrzeug (B) in dessen Umgebung und/oder Umfeld, umfassend eine Messung eines Abstands (F) vom eigenen Fahrzeug (A) aus zu einem fremden Fahrzeug (B), wobei bei einer durch einen Vergleich des gemessenen Abstands (F) mit einem Abstandsschwellenwert festgestellten Unterschreitung eines vorgegebenen Mindestabstands und/oder eines dem Mindestabstand proportionalen Sicherheitsabstands (E) eine Erfassung und zumindest zeitweilige Speicherung von einem oder mehreren Bildern zumindest desjenigen Teils der Umgebung und/oder des Umfelds des eigenen Fahrzeugs (A) aktiviert wird, in welchem Teil der Umgebung und/oder des Umfelds des eigenen Fahrzeugs (A) sich das fremde Fahrzeug (B), dessen gemessener Abstand (F) zum eigenen Fahrzeug (A) den Abstandsschwellenwert (E) unterschreitet, befindet, und wobei eine auf das eigene Fahrzeug (A) einwirkende Beschleunigung erfasst, und diese mit einem Beschleunigungsschwellenwert verglichen wird, wobei wenn das Ergebnis des Vergleichs eine Überschreitung des Beschleunigungsschwellenwerts ist, eine dauerhafte Speicherung der bis dato zeitweilig gespeicherten Bilder erfolgt.

2. Verfahren nach Anspruch 1, wobei der Mindestabstand abhängig von hierzu erfassten und/oder erlangten:
- herrschenden physikalischen Randbedingungen und/oder
- momentanen Fahrzuständen des eigenen Fahrzeugs (A) und/oder
- momentanen Fahrzuständen des fremden Fahrzeugs (B) und/oder vom physiologisch bedingten Reaktionsvermögen eines durchschnittlichen Fahrers eines Fahrzeugs (A, B) ist.

3. Verfahren nach Anspruch 1 oder 2, wobei die Erfassung von Bildern andauernd stattfindet und die zumindest zeitweilige Speicherung der erfassten Bilder bei Unterschreitung des Abstandsschwellenwerts (E) vorgenommen wird.

4. Verfahren nach Anspruch 1, 2 oder 3, wobei eine permanente Speicherung der bis dato erfassten Bilder bei Trennung von einer Stromversorgung erfolgt.

5. Verfahren nach einem der Ansprüche 1 bis 4, wobei der jeweils gemessene Abstand (F) in das erfasste Bild eingeblendet wird.

6. Verfahren nach einem der voranstehenden Ansprüche, wobei zusätzlich zu einer Speicherung der erfassten Bilder eine Speicherung der gewonnenen Abstands- und/oder Geschwindigkeits- und/oder Mindestabstandsdaten erfolgt.

7. Verfahren nach einem der voranstehenden Ansprüche, wobei die Speicherung zyklisch überschrieben wird.

8. Fahrzeugleuchte (01) zur Beweiserfassung bei Unterschreitung eines Sicherheitsabstands zwischen aufeinander folgenden Fahrzeugen (A, B), einem eigenen Fahrzeug (A) und wenigstens einem fremden Fahrzeug (B) in dessen Umgebung und/oder Umfeld, umfassend ein Leuchtengehäuse und wenigstens eine Lichtscheibe, welche zumindest teilweise einen Leuchteninnenraum umgeben, mindestens ein in dem Leuchteninnenraum wenigstens zum Teil beherbergtes Leuchtmittel mit mindestens einer Lichtquelle zur Erfüllung zumindest einer Lichtfunktion, mindestens eine auf eine dem Leuchtengehäuse abgewandte Umgebung gerichtete und in zumindest einem Teil des Leuchteninnenraums wenigstens teilweise beherbergte Kamera, mit der Kamera verbundene Speichermittel zur Speicherung zumindest von von der Kamera erfasster Bilder der Umgebung, Mittel zur Erfassung eines Abstands zu einem fremden Fahrzeug (B) in der von der Kamera einsehbaren Umgebung der Fahrzeugleuchte (01), sowie mit den Mitteln zur Abstandsmessung verbundene Mittel zum Vergleich des gemessenen Abstands mit einem Abstandsschwellenwert (E), wobei die Mittel zum Vergleich mit der Kamera und/oder den Speichermitteln derart verbunden sind, dass sie eine Aufnahme von Bildern der Umgebung durch die Kamera und/oder eine Speicherung der von der Kamera erfassten Bilder der Umgebung auslösen, wenn das Ergebnis des Vergleichs ist, dass der gemessene Abstand (F) kleiner ist, als der Abstandsschwellenwert (E), und wobei sie Mittel zur Erfassung und/oder Erlangung einer momentan auf das mit ihr verbundene Fahrzeug (A) und/oder sie selbst einwirkenden Beschleunigung umfasst.

9. Fahrzeugleuchte nach Anspruch 8, wobei die Kamera durch eine Partie der Lichtscheibe oder durch eine der Lichtscheibe benachbarte Partie aus dem Leuchteninnenraum heraus in die Umgebung blickt.

10. Fahrzeugleuchte nach Anspruch 8 oder 9, wobei sie Mittel zur Erfassung und/oder Erlangung von Umgebungsbedingungen sowie Mittel zur Veränderung des Abstandsschwellenwerts (E) in Abhängigkeit von den Umgebungsbedingungen umfasst.

11. Fahrzeugleuchte nach Anspruch 8, 9 oder 10, wobei sie einen Speicher zum zumindest kurzzeitigen Betrieb wenigstens der Kamera und/oder der Speichermittel der Fahrzeugleuchte (01) benötigter elektrischer Energie umfasst.

12. Fahrzeugleuchte nach einem der Ansprüche 8 bis 11, wobei sie als Heckleuchte ausgebildet ist.
